# EUROPEAN PATENT APPLICATION

(11) **EP 4 645 933 A1**
(43) Date of publication of application: **05.11.2025**
(21) Application number: 22969815.4
(22) Date of filing: 30.12.2022
(51) Int. Cl.: H04W 24/02

(54) **WIRELESS COMMUNICATION METHODS AND COMMUNICATION DEVICES**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: Grassi, Stefano
(86) International application number: PCT/CN2022/144111
(87) International publication number: WO 2024/138673

(57) **Abstract**

Provided in the present application are wireless communication methods and communication devices. A method comprises: a first device determining first information, the first information comprising one or more of the following: a first public identifier associated with a first model used for wireless communication, and a first local identifier associated with the first model and/or the first public identifier. In the embodiments of the present application, the first device can determine the first information used for indicating the first model, thus facilitating indication of the first model in wireless communication systems.

## Description

### TECHNICAL FIELD

The present disclosure relate to the field of communication technologies, and in particular to a method for wireless communication and a communication device.

### BACKGROUND

With the development of artificial intelligence (AI) technology, models (e.g., AI models or machine learning models) based on AI technology are used widely in various wireless communication processes, which greatly increases the number of models used in the wireless communication processes. In some scenarios, in order to ensure the accuracy of results output from the models, different models may be used for different problems, different execution entities, different usage environments, different input data, and different target accuracies. In other scenarios, different models can be utilized even for the same problem, and different execution entities can adopt different model deployment schemes and model optimization schemes even for the same model. As a result, how to instruct different models in wireless communication systems becomes an urgent problem to be solved.

### SUMMARY

The present disclosure provides a method for wireless communication and a communication device. Various aspects of the present disclosure are described below.

In a first aspect, there is provided a method for wireless communication, which includes the following operation. A first device determines first information. The first information includes one or more of the following: a first public identity, associated with a first model for wireless communication; or a first local identity, associated with the first model and/or the first public identity.

In a second aspect, there is provided a method for wireless communication, which includes the following operation. A second device receives first information sent by a first device. The first information includes one or more of the following: a first public identity, associated with a first model for wireless communication; or a first local identity, associated with the first model and/or the first public identity.

In a third aspect, there is provided a communication device, and the communication device is a first device and includes a determining unit. The determining unit is configured to determine first information. The first information includes one or more of the following: a first public identity, associated with a first model for wireless communication; or a first local identity, associated with the first model and/or the first public identity.

In a fourth aspect, there is provided a communication device, and the communication device is a second device and includes a receiving unit. The receiving unit is configured to receive first information sent by a first device. The first information includes one or more of the following: a first public identity, associated with a first model for wireless communication; or a first local identity, associated with the first model and/or the first public identity.

In a fifth aspect, there is provided a communication device, which includes a transceiver, a memory, and a processor, where the memory is configured to store a program, the processor is configured to call the program in the memory, and control the transceiver to receive or transmit signals to cause a terminal to implement the method of any of the various aspects.

In a sixth aspect, there is provided an apparatus, including a processor, where the processor is configured to call a program from a memory to cause the apparatus to implement the method of any of the various aspects.

In a seventh aspect, there is provided a chip, which includes a processor, and the processor is configured to call a program from a memory to cause a device equipped with the chip to implement the method of any of the various aspects.

In an eighth aspect, there is provided a computer-readable storage medium, having stored thereon a program that causes a computer to implement the method of any of the various aspects.

In a ninth aspect, there is provided a computer program product, including a program, where the program causes a computer to execute the method of any of the various aspects.

In a tenth aspect, there is provided a computer program, which causes a computer to execute the method of any of the various aspects.

In the embodiments of the present disclosure, the first device may determine the first information for indicating the first model, which is helpful to realize the indication of the first model in the wireless communication systems.

### BRIEF DESCRIPTION OF THE DRAWINGS

FIG. 1 is a schematic diagram of a system architecture of a wireless communication system to which embodiments of the present disclosure can be applied.
FIG. 2 is a schematic diagram of channel estimation and signal recovery to which embodiments of the present disclosure are applicable.
FIG. 3 is a schematic diagram of a process of channel estimation based on an AI decoder.
FIG. 4 is a schematic diagram of an autoencoder-based CSI feedback system.
FIG. 5 is a schematic diagram of a receiver based on an AI decoder.
FIG. 6 is a schematic diagram of beam selection based on an AI model.
FIG. 7 is a schematic diagram of a positioning scheme based on an AI model.
FIG. 8 is a schematic diagram of a neural network to which embodiments of the present disclosure is applicable.
FIG. 9 is a schematic diagram of a convolutional neural network to which embodiments of the present disclosure is applicable.
FIG. 10 is a schematic flow diagram of a method for wireless communication according to an embodiment of the present disclosure.
FIG. 11 is a schematic diagram of an information transmission method according to an embodiment of the present disclosure.
FIG. 12 is a schematic diagram of an information transmission method according to another embodiment of the present disclosure.
FIG. 13 is a schematic diagram of a communication device according to an embodiment of the present disclosure.
FIG. 14 is a schematic diagram of a communication device according to an embodiment of the present disclosure.
FIG. 15 is a schematic structural diagram of an apparatus according to an embodiment of the present disclosure.

### DETAILED DESCRIPTION

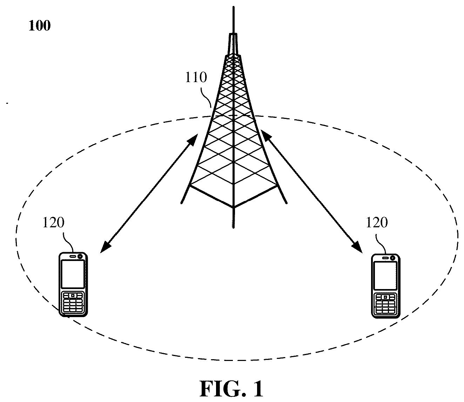

The technical solutions of the present disclosure will be described below with reference to the accompanying drawings. For ease of understanding, a communication system applicable to the embodiments of the present disclosure, as well as related terms and communication processes will be described below with reference to FIG. 1 to FIG. 9.

FIG. 1 illustrates a wireless communication system 100 to which the embodiments of the present disclosure are applied. The wireless communication system 100 may include a network device 110 and terminal devices 120. The network device 110 may be a device that communicates with the terminal devices 120. The network device 110 may provide communication coverage for a particular geographic area and may communicate with the terminal devices 120 located within the coverage area.

FIG. 1 exemplarily illustrates a network device and two terminals. Optionally, the wireless communication system 100 may include multiple network devices, and other numbers of terminal devices may be included within the coverage of each network device, which is not limited by the embodiments of the present disclosure.

Optionally, the wireless communication system 100 may also include other network entities such as a network controller, a mobility management entity and the like, which are not limited by the embodiments of the present disclosure.

The technical solutions of the embodiments of the present disclosure may be applied to various communication systems, such as a 5th generation (5G) system or a new radio (NR), a long term evolution (LTE) system, an LTE frequency division duplex (FDD) system, an LTE time division duplex (TDD) system, etc. The technical solutions provided by the present disclosure may also be applied to a future communication system, such as a sixth generation mobile communication system, a satellite communication system, etc.

The terminal device in the embodiments of the present disclosure may also be referred to as user equipment (UE), an access terminal, a user unit, a user station, a mobile platform, a mobile station (MS), a mobile terminal (MT), a remote station, a remote terminal, a mobile device, a user terminal, a terminal, a wireless communication device, a user agent or a user device. The terminal devices in the embodiments of the present disclosure may be devices that provide voice and/or data connectivity to the user and may be used to connect people, objects and machines, such as handheld devices with wireless connectivity capabilities, vehicle devices, etc. In the embodiments of the present disclosure, the terminal device may be a mobile phone, a Pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminals in smart home, etc. Optionally, UE may be used as a base station. For example, the UE may act as a scheduling entity that provides sidelink signals between UEs in V2X or D2D or the like. For example, cellular phones and cars communicate with each other using sidelink signals, and cellular phones and smart home devices perform communication without relying on a base station for relaying communication signals.

The network device in the embodiments of the present disclosure may be a device used to communicate with the terminal devices. The network device may also be referred to as an access network device or a wireless access network device, for example, the network device may be a base station. The network device in the embodiments of the present disclosure may refer to a radio access network (RAN) node (or a device) that connects a terminal device to a wireless network. The base station may broadly cover or replace the following names, such as a Node B (NodeB), an evolved NodeB (eNB), a next generation NodeB (gNB), a relay station, an access point, a transmitting and receiving point (TRP), a transmitting point (TP), a master station (MeNB), a secondary station (SeNB), a multi-standard wireless (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a donor node or the like, or a combination thereof. The base station may also refer to a communication module, a modem or a chip provided in the above device or equipment. The base station also may be a mobile switching center, a device that performs functions of the base station in device-to-device (D2D), vehicle-to-everything (V2X), and machine-to-machine (M2M) communications, or a network-side device in a 6G network, a device that performs functions of the base station in future communication systems, etc. The base station may support networks with the same or different access technologies. The specific technology and the specific device form adopted by the network device are not limited by the embodiments of the present disclosure.

The base station may be fixed or mobile. For example, a helicopter or unmanned aerial vehicle may be configured to act as a mobile base station, and one or more cells may move depending on the location of the mobile base station. In other examples, the helicopter or unmanned aerial vehicle may be configured to serve as a device for communicating with another base station.

In some deployments, the network device in embodiments of the present disclosure may refer to a CU or a DU, or the network device may include the CU and the DU. The gNB may also include the AAU.

The network device and the terminal devices may be deployed on land, including indoor or outdoor, hand-held or in-vehicle. The network device and the terminal devices may also be deployed on the water. The network device and the terminal devices may also be deployed on airplanes, balloons and satellites on the air, etc. The scenarios in which the network device and the terminal devices are located are not limited by embodiments of the present disclosure.

It is to be understood that all or part of the functions of the communication device in the present disclosure may also be implemented by software functions running on hardware or by virtualized functions instantiated on a platform (e.g. a cloud platform).

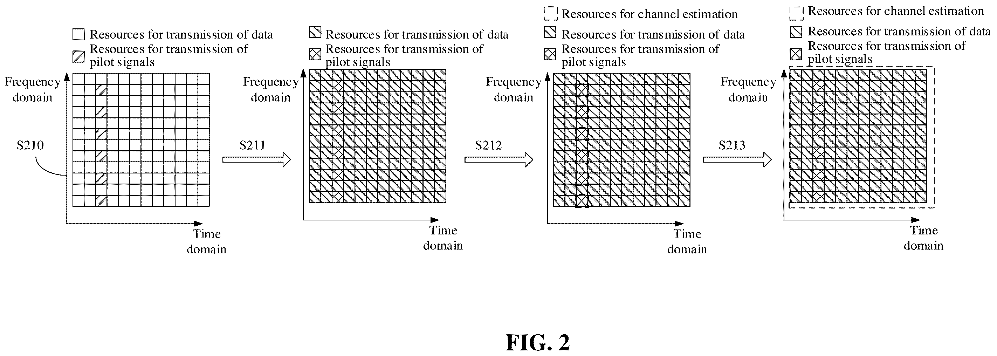

With the development of AI technology, AI models are introduced into more and more communication processes. In order to facilitate understanding, the following takes an autoencoder as an example of an AI model, and introduces the use of autoencoder in the communication process in combination with FIG. 2 to FIG. 5. It is to be noted that the AI model (hereinafter, also referred to as a "first model") to which the embodiments of the present disclosure are applicable is not limited to the autoencoder.

The autoencoder is a neural network that takes an input signal as a training objective, and architecture of an AI encoder and/or an AI decoder included in the autoencoder is adapted to many pieces of architecture naturally in the communication systems. For example, the AI encoder and the AI decoder may correspond to a transmitter and a receiver of a wireless communication system, respectively. For another example, the AI encoder and the AI decoder may correspond to a channel compression module and a decompression module respectively in a CSI feedback process. For another example, the AI decoder in the autoencoder may also be applied separately in a channel estimation process for recovery of channel information by the receiver. The following will be described in conjunction with FIG. 2 to FIG. 4, and will not be repeated here for the sake of brevity.

Typically, the autoencoder may be trained based on a training set before the autoencoder is deployed in a communication system. For instance, when the autoencoder only includes an AI decoder, the AI decoder may be trained based on the training set. When the autoencoder includes an AI encoder, the AI encoder may be trained based on the training set. When the autoencoder includes both the AI encoder and the AI decoder, the AI encoder and the AI decoder may be trained jointly.

In some implementations, since the autoencoder is a neural network model that takes the input signal as the training objective, when a difference between an input and output of the autoencoder is represented by a loss function, the training objective of the autoencoder may be understood as optimizing weights of the AI encoder and the AI decoder under a condition that the loss function is minimized.

For example, an autoencoder including an AI encoder *f*(·) and an AI decoder *g*(·) is denoted as *g*(*f*(·)). After an original signal s is first encoded by the AI encoder *f*(·), the AI encoder *f*(·) outputs an encoded signal, denoted as **q** = f(s). The encoded signal is input to the AI decoder *g*(·) for decoding, and a decoded signal output by the AI decoder *g*(·) is denoted as **s'** = *g*(**q**) = *g*(*f*(**s**)). In a joint training stage, min__{{*g*, *f*}} *l*(**s**, *g*(*f*(**s**))) may be taken as the training objective, and the AI encoder *f*(·) and the AI decoder *g*(·) may be trained jointly, where *l*(·) represents the loss function.

### Channel estimation based on AI decoder

Due to the complexity and time variability of a wireless channel environment, in a wireless communication system (e.g., the wireless communication system introduced above), the receiver needs to recover the received signals based on estimated results of channels. FIG. 2 is a schematic diagram of channel estimation and signal recovery to which embodiments of the present disclosure are applicable.

As illustrated in FIG. 2, at operation S210, in addition to transmitting data signals on time-frequency resources, the transmitter also transmits a series of pilot signals known to the receiver, such as a channel state information-reference signal (CSI-RS), a demodulation reference signal (DMRS), and the like.

At operation S211, the transmitter transmits the above data signals and the pilot signals to the transmitter through a channel.

At operation S212, the receiver may perform channel estimation after receiving the pilot signals. In a possible implementation, the receiver may estimate channel information of the channel on which the pilot signals are transmitted by a channel estimation algorithm (e.g., a least squares method (LS) channel estimation) based on the pre-stored pilot sequence and the received pilot sequence.

At operation S213, the receiver may recover channel information on entire time frequency resources by using an interpolation algorithm according to the channel information of the channel on which the pilot sequence is transmitted, and this recovered channel information is then used for subsequent channel state information (CSI) feedback, data recovery, or the like.

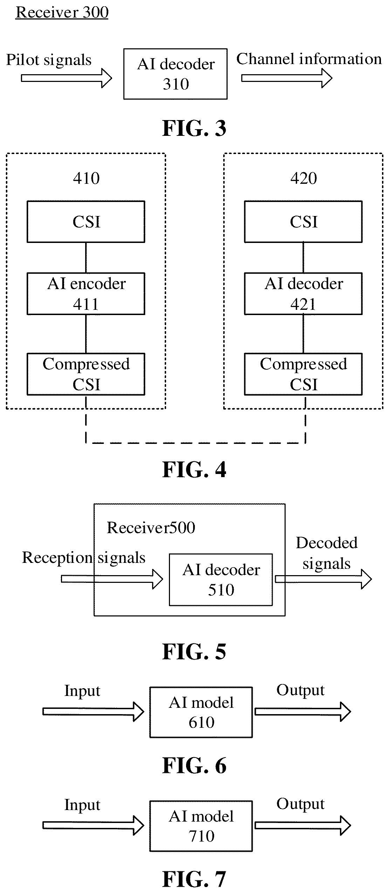

Channel estimation based on the AI decoder aims to use the AI decoder to process the pilot signals received by the receiver to realize channel estimation. FIG. 3 illustrates a process of channel estimation based on an AI decoder. Referring to FIG. 3, the pilot signals received by the receiver 300 are input to the AI decoder 310, and accordingly, the AI decoder 310 processes the input pilot signals to output channel information. In addition, in some implementations, in addition to the pilot signals, other auxiliary information may be added to improve the accuracy of channel information output by the AI decoder. For example, an original sequence of pilot signals pre-stored by the receiver 300, an energy level of the pilot signals received by the receiver 300, a transmission delay when the receiver 300 transmits the pilot signals, a noise when the receiver 300 transmits the pilot signals, and the like may also be input to the AI decoder 310.

### Autoencoder-based CSI feedback

In the wireless communication systems, a codebook-based scheme is mainly used to realize extraction and feedback of channel features, that is, after the receiver performs the channel estimation, according to results of the channel estimation, a precoding matrix that best matches a current channel is selected from a predefined precoding codebook according to a certain optimization criterion, and precoding matrix index (PMI) information is fed back to the transmitter through a feedback link of an air interface for the transmitter to realize precoding. In some implementations, the receiver may also feed back a measured channel quality indication (CQI) to the transmitter for the transmitter to implement adaptive modulation and coding, etc.

FIG. 4 illustrates an autoencoder-based CSI feedback system. As illustrated in FIG. 4, an entire feedback system includes an AI encoder 411 and an AI decoder 421 of the autoencoder, where the AI encoder 411 is deployed at a transmitter 410 and the AI decoder 421 is deployed at a receiver 420. The transmitter 410 compresses and encodes, through the AI encoder 411, CSI to be transmitted to obtain compressed CSI. Then, the compressed CSI is fed back to the receiver 420 through a feedback link, and the receiver 420 decodes the compressed CSI through the AI decoder 421 to obtain recovered CSI. In this way, a communication overhead of CSI feedback can be saved without affecting the accuracy of CSI transmission.

### Receiver based on AI decoder

By introducing the AI decoder into a design of the receiver, and using the AI decoder to realize an internal signal processing process (such as demodulation, decompression, etc.) of the receiver, the performance of the receiver is improved. FIG. 5 is a schematic diagram of a receiver based on an AI decoder. In the receiver 500 illustrated in FIG. 5, the input of the AI decoder 510 is a reception signal received by the receiver, and the output thereof is a decoded signal.

As can be seen from the above introduction, the design of modular communication system based on the autoencoder is a trend in the development of the communication system, which can make good use of a prior structure of traditional communication system models, and can also adjust and train the AI encoder and/or AI decoder in the autoencoder flexibly.

In some scenarios, an AI model may also be used for beam management, and a beam management process based on the AI model is described below with reference to FIG. 6.

### Beam management based on AI model

In the traditional beam selection process, it is usually necessary to traverse all combinations of reception beams and transmission beams in order to select an appropriate beam. However, the time required to traverse all combinations is longer, resulting in less efficient beam selection.

For example, assuming that a network device is deployed in FR2 (frequency range 2) with 64 different downlink transmission directions (carried by up to 64 synchronization signal and physical broadcast channel blocks (SSBs)), accordingly, a terminal device uses one or more antenna panels to simultaneously perform reception beam scanning during reception, and each antenna panel has 4 reception beams. Then the terminal device needs to measure at least 256 beam pairs, that is, a downlink resource overhead of 256 resources is required. From the perspective of time, each SSB cycle is about 20ms, and 4 SSB cycles are required to complete the measurement of the 4 reception beams. Assuming that a plurality of receiving antenna panels may perform beam scanning simultaneously, at least 80ms is required.

With the increasing number of beams in future large-scale multiple-in multiple-out (MIMO) systems, in order to match optimal beam pairs, using beam management schemes based on beam scanning will only bring greater reference signal transmission overhead and beam scanning delay. Therefore, in order to avoid the above problems, beam management based on the AI model is proposed in R18. The following introduces the beam management scheme based on the AI model combining a training process and a prediction process of the AI model respectively.

Assuming that the AI model is used to predict available beams from a beam set A, accordingly, in a training phase, beam measurement results of a beam set B may be used as training data for the AI model. That is, the AI model may be trained based on the beam measurement results of the beam set B, so that the AI model can predict the available beams from the beam set A.

It is to be noted that the beam measurement results of the beam set B may include measurement results corresponding to layer 1 (L1) measurement quantities, and/or indication information (for example, a transmission beam identity, a reception beam identity, a beam pair identity, or the like) of a selected beam(s) in the beam set B.

In some implementations, the training data may further include label information of the beam set A, and the label information is used to indicate one or more of the following beams in the beam set A: an optimal transmission beam, an optimal reception beam, an optimal beam pair, a better plurality of transmission beams, a better plurality of reception beams, a better beam pair, and the like.

Referring to FIG. 6, in the prediction phase, an input of the AI model 610 may include a link quality measurement result (e.g., an L1 measurement quantity) corresponding to beams in the beam set A, and a prediction result output by the AI model 610 may include a target beam selected from the beam set A, and a link quality corresponding to the target beam.

In some implementations, the target beam described above may be one or more beams. Taking the target beam including one beam as an example, the target beam may be an optimal beam or a better beam in the beam set A. Taking the target beam including a plurality of beams as an example, the target beam may be a plurality of beams in the beam set A that meet the requirements, where meeting the requirements may be understood as that a link quality corresponding to a beam meets the requirements, for example, a link quality corresponding to the beam is greater than or equal to a threshold.

In other implementations, the target beam described above may refer to one or more beam pairs, where each beam pair may include a reception beam or a transmission beam. Taking the target beam including one beam pair as an example, the target beam may be an optimal beam pair or a better beam pair in the beam set A. Taking the target beam including a plurality of beam pairs as an example, the target beam may be a plurality of beam pairs in the beam set A that meet the requirements, where meeting the requirements may be understood as that a link quality corresponding to a beam pair meets the requirements, for example, a link quality corresponding to the beam pair is greater than or equal to a threshold.

It is to be noted that the link quality in the embodiments of the present disclosure may be determined by one or more measurement quantities described above. Of course, the link quality in the embodiments of the present disclosure may also be determined based on other measurement quantities in the future communication system, which is not limited by the embodiments of the present disclosure.

In addition, the above link quality is determined based on one or more measurement quantities, which may be understood that the link quality is obtained by processing the one or more measurement quantities, and of course, the link quality may also be a measurement quantity, which is not limited by the embodiments of the present disclosure.

It is also to be noted that, if the prediction result indicates only one beam in the beam pair, another one in the beam pair may be determined by other manners. For example, it may be determined by one or some procedures of P1 to P3 in a conventional beam selection process, or it may be determined by one or some procedures of U1 to U3 in the conventional beam selection process, which is not limited by the embodiments of the present disclosure.

In some implementations, the beam set B described above may be different from the beam set A. In some implementations, the beam set B may be a subset of the beam set A, and accordingly, by measuring fewer beams (i.e., beams in the beam set B), prediction for more beams (i.e., beams in the beam set A) may be achieved, which is helpful to reduce the time required to perform the beam selection process compared to the above scheme of beam selection implemented by traversing all combinations. Of course, in the embodiments of the present disclosure, beams in the beam set B may be completely different from beams in the beam set A, for example, there is no intersection between the beam set B and the beam set A, but beam directions corresponding to the beam set B may be similar to beam directions corresponding to the beam set A.

In other implementations, the above beam set B may be exactly the same as the beam set A.

### Positioning based on an AI model

In cellular wireless positioning, the linear propagation of electromagnetic waves between the network device and the terminal device is called line of sight (LOS) wireless propagation. In some cases, electromagnetic wave signals cannot propagate in a straight line due to the obstruction of buildings or trees, which is usually referred to as non-line of sight (NLOS) wireless propagation. Traditional positioning algorithms such as time difference of arrival (TDOA) and angle-of-arrival (AOA) are based on LOS channels and are no longer applicable in NLOS-dominated environments. In most scenarios, the number of the network devices that have LOS channels with the terminal device is often small, resulting in the accuracy of traditional positioning algorithms failing to meet the requirements for high-precision positioning. In addition, there may be some non-ideal factors in the actual system, which will lead to the reduction of positioning accuracy.

Therefore, high-precision positioning in a LOS/NLOS channels coexistence scenario based on AI model is proposed. Some existing research results have shown that based on a large amount of channel data, machine learning methods are used to train the model and mine a mapping relationship between channel response and position coordinates, which can solve the problem that traditional positioning algorithms cannot be applied in the LOS/NLOS channels coexistence scenario, and improve the positioning accuracy.

FIG. 7 is a schematic diagram of a positioning scheme based on an AI model to which embodiments of the present disclosure are applicable. Referring to FIG. 7, in a positioning scheme based on the AI model 710 for the LOS/NLOS channels coexistence scenario, a channel response may be used as an input of the AI model 710, and position coordinates may be used as an output of the AI model 710. An internal relationship between wireless channels and locations of the terminal device is learned through the AI model 710, and thus even in scenarios where there are not enough LOS channels and/or in scenarios where non-ideal conditions exist, , position coordinates of the terminal device with higher precision may be output using the positioning scheme based on the AI model 710, which is helpful to meet the requirements for high-precision positioning.

Several communication processes applicable to the AI models have been described above, and the AI models applicable to the embodiments of the present disclosure are described below. It is to be noted that the AI models applicable to the embodiments of the present disclosure are not limited to the AI models described below.

### Neural network

In recent years, artificial intelligence research represented by the neural network has made great achievements in many fields, and it will also play an important role in production and life of people for a long time to come. The neural network may be understood as an operational model composed of a plurality of neuron nodes connected to each other, where the connections between nodes may represent weighted values from input signals to output signals, typically referred to as weight. Weighted summation is performed on different input signals at each node and an output is generated through a specific activation function.

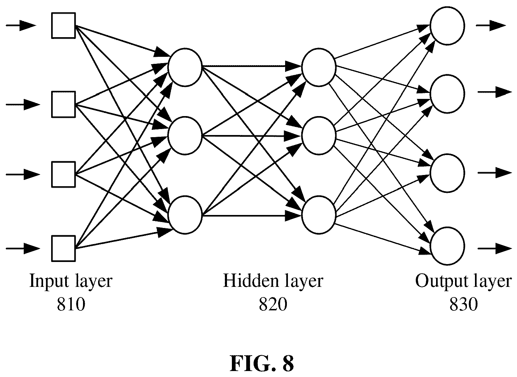

Referring to FIG. 8, neurons may implement nonlinear mapping depending on the activation function, where an input of the neuron may be denoted as A, each dimension of the input is denoted as aⱼ, and a corresponding weight is denoted as wⱼ and is used together with summation units (SU) to enhance or weaken the input. In addition, an output of the SUs may be input into the activation function f to obtain an output t. Herein, values of j are 1, 2, ... , n.

Common neural networks include a convolutional neural network (CNN), a recurrent neural network (RNN), a deep neural network (DNN), etc.

The neural network applicable to the embodiments of the present disclosure is described below in conjunction with FIG. 8. The neural network illustrated in FIG. 8 may be divided into three types of layers according to the locations of different layers: an input layer 810, hidden layers 820, and an output layer 830. In general, the first layer is the input layer 810, the last layer is the output layer 830, and all intermediate layers between the first layer and the last layer are hidden layers 820.

The input layer 810 is used to input data, for example, the input data may be reception signals received by a receiver. The hidden layers 820 are used to process the input data, for example, to decompress the reception signals. The output layer 830 is used to output the processed output data, for example, to output decompressed signals.

As illustrated in FIG. 8, the neural network includes a plurality of layers, each layer includes a plurality of neurons, and the neurons between the layers may be fully connected or partially connected. For connected neurons, outputs of the neurons in the upper layer may be used as inputs of the neurons in the next layer.

With the continuous development of researches on neural networks, neural network deep learning algorithms have been proposed in recent years, introducing more hidden layers into neural networks to form DNN. More hidden layers allow DNN to describe complex situations in real world. Theoretically speaking, a model with more parameters tends to have higher complexity and greater "capacity", which means that the model can complete more complex learning tasks. This type of neural network model is widely applied in areas such as pattern recognition, signal processing, combinatorial optimization, and anomaly detection.

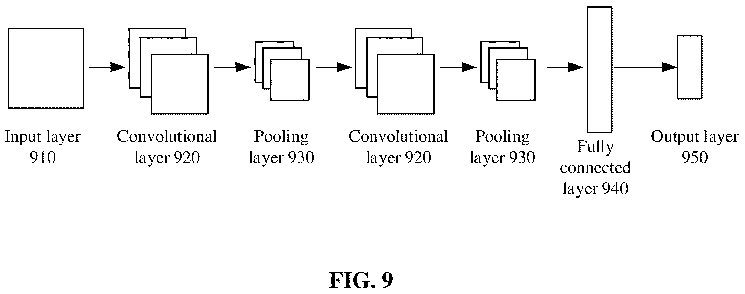

Convolutional Neural Network (CNN) is a deep neural network with a convolutional structure, and its structure is illustrated in FIG. 9, which may include an input layer 910, convolutional layers 920, pooling layers 930, a fully connected layer 940, and an output layer 950.

Each convolutional layer 920 may include numerous convolutional operators, also referred to as kernels, which may be functionally regarded as a filter to extract specific information from input signals. Essentially, the convolutional operators are weight matrices, which are usually predefined.

Weight values within these weight matrices are obtained by extensive training in practical applications. Information may be extracted from the input signals by each of weight matrices formed by the weight values obtained through training, thereby helping CNN perform correct predictions.

When a CNN has multiple convolutional layers, an initial convolutional layer typically extracts more general features, also referred to as low-level features. As the depth of the CNN increases, features extracted by subsequent convolutional layers become increasingly complex.

For pooling layer 930, due to the frequent need to reduce the number of training parameters, it is often necessary to periodically introduce a pooling layer after a convolutional layer. For example, a convolutional layer may be followed by a pooling layer as illustrated in FIG. 9, or multiple convolutional layers may be followed by one or more pooling layers. In signal processing, the sole purpose of the pooling layer is to reduce the spatial size of the extracted information.

For fully connected layers 940, after processing by the convolutional layers 920 and the pooling layers 930, the CNN is not sufficient to output required output information. As described above, the convolutional layers 920 and the pooling layers 930 only extract features and reduce parameters brought by the input data. However, in order to generate final output information (e.g., a bitstream of raw information transmitted by a transmitting end), the CNN also needs to utilize the fully connected layer 940. Generally, the fully connected layer 940 may include a plurality of hidden layers, and parameters included in the plurality of hidden layers may be trained in advance according to relevant training data of a specific task type. For example, the task type may include decoding data signals received by a receiver. For another example, the task type may further include channel estimation based on pilot signals received by the receiver.

After the plurality of hidden layers in the fully connected layer 940, that is, the last layer of the entire CNN is an output layer 950 for outputting results. Typically, the output layer 950 is provided with a loss function (e.g., a loss function similar to classification cross entropy) for calculating a prediction error or for evaluating a degree of difference between a result (also known as a predicted value) output by the CNN model and an ideal result (also known as a true value).

In order to minimize the loss function, the CNN model needs to be trained. In some implementations, the CNN model may be trained using a backpropagation algorithm (BP). The training process of BP consists of a forward propagation process and a back propagation process. In a process of forward propagation (i.e., a propagation from 910 to 950 is the forward propagation as illustrated in FIG. 9), input data is input into the above layers of the CNN model, processed layer by layer, and transmitted to the output layer. If the output result at the output layer is quite different from the ideal result, a minimization of the above loss function is taken as an optimization objective, turning to a back propagation process (i.e., a propagation from 950 to 910 is the back propagation as illustrated in FIG. 9). During this process, partial derivatives of the optimization objective with respect to weights of each neuron are obtained layer by layer, and these partial derivatives form a gradient quantity of the optimization objective relative to weight vectors, which is used as a basis for modifying the model's weights. The training process of CNN is completed in process of weight modifications. When the above difference reaches an expected value, the training process of CNN ends.

It is to be noted that the CNN illustrated in FIG. 9 is only an example of a convolutional neural network, and in a specific application, the convolutional neural network may also exist in the form of other network models, which is not limited by the embodiments of the present disclosure.

used RNNs are used to process sequence data. In the traditional neural network models (for example, in the CNN model), information is transmitted from the input layer to the hidden layers and then to the output layer, where the layers are fully connected, and the nodes between each layer are unconnected. However, this ordinary neural network is powerless for many problems. For example, if you want to predict what a next word in a sentence will be, you usually need to use the previous word, because words before and after in a sentence are not independent. The reason why RNNs are called recurrent neural networks is that a current output of a sequence is also related to a previous output. Specifically, the network will memorize previous information and apply it to a calculation of the current output, that is, the nodes between the hidden layers are no longer unconnected but connected, and the input of the hidden layers includes not only an output of the input layer but also an output of the hidden layers at a previous moment. Theoretically, RNNs are capable of processing sequence data of any length.

Training of RNN is similar to that of traditional artificial neural network (ANN), both of which uses BP error back propagation algorithm, but there is one difference therebetween. If the RNNs are unrolled, the parameters W, U, V are shared, while this is not the case for traditional neural networks. In addition, when using a gradient descent algorithm, an output at each step depends not only on a network state at a current step, but also on the network states at previous steps. For example, when t=4, three more steps need to be propagated backwards, and the gradients for the three steps need to be accumulated as well. The learning algorithm is called a back propagation through time (BPTT) algorithm.

Now that there are already artificial neural networks and convolutional neural networks, why do we still need recurrent neural networks? The reason is very simple. Whether it is a convolutional neural network or an artificial neural network, it is under a premise that elements are independent of each other, and the input and output are also independent, such as cats and dogs. But in the real world, many elements are interconnected, such as a change of stocks over time. One person said: I like traveling, and my favorite place is Yunnan. If I have a chance in the future, I must go to _. Fill in the blanks here. Everyone should know to fill in "Yunnan", because we infer it based on the content of the context, it is quite difficult for a machine to do this step. Therefore, there is the current recurrent neural network, whose essence is to have an ability to remember like a human. Therefore, the output of the recurrent neural network depends on the current input and its memory.

As described above, with the development of AI technology, models based on AI technology (for example, AI models or ML models) are widely used in various wireless communication processes, which greatly increases the number of models used in wireless communication processes. In some scenarios, in order to ensure the accuracy of results output from the models, different models may be used for different problems, different execution entities, different usage environments, different input data, and different target accuracies. In other scenarios, different models can be utilized even for the same problem, and different execution entities can adopt different model deployment schemes and model optimization schemes even for the same model. As a result, how to instruct different models in wireless communication systems becomes an urgent problem to be solved.

Therefore, in view of the above problems, embodiments of the present disclosure provide a method for wireless communication, in which a first device may determine first information for indicating a model (hereinafter, also referred to as a "first model"), which is helpful to realize indicating the first model in a wireless communication system.

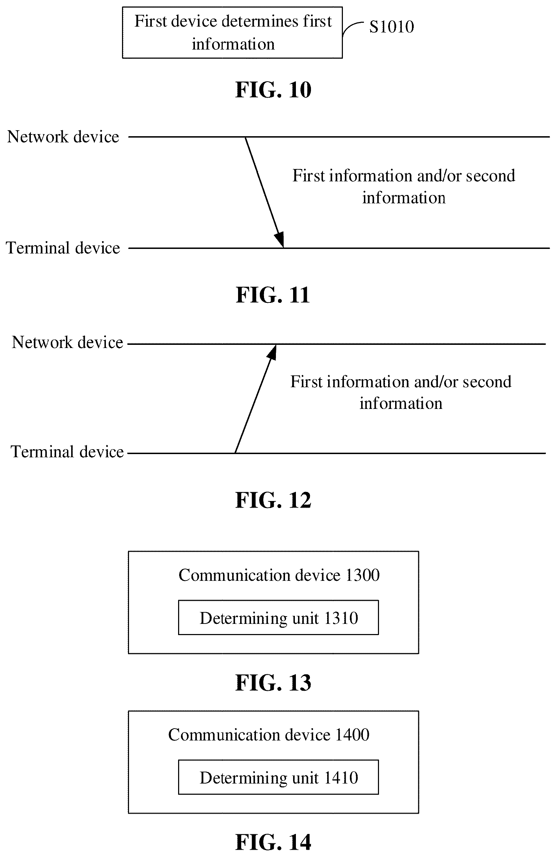

For ease of understanding, the method for wireless communication according to an embodiment of the present disclosure will be described below with reference to FIG. 10. FIG. 10 is a schematic flow diagram of a method for wireless communication according to an embodiment of the present disclosure. The method described in FIG. 10 includes operation S1010.

At operation S1010, the first device determines the first information. The first device may be a terminal device or a network device, and the network device may be, for example, an access network device or a core network device, which is not limited by the embodiments of the present disclosure.

In some implementations, the first information may include a first public identity, where the first public identity is associated with a first model for wireless communication, or the first public identity is used to identify the first model. For example, the first public identity is used to identify the first model uniquely within a first scope. The first range may include, for example, a global scope, a nation, a region, or an organization, and the like, which is not limited by the embodiments of the present disclosure.

It is to be noted that the scenario in which the first information is determined is not limited by the embodiments of the present disclosure. For example, the first information may be determined during use of the first model by the first device. For another example, the first information may be determined when the first device updates the first model. For another example, the first information may be determined when the first device manages the first model, where managing the first model may include, for example, activating the first model and/or deactivating the first model.

In some implementations, the first public identity may include a first identity. The first identity is used for identifying an applicable scope of the first model. The following takes a third identity and a fourth identity as examples to introduce the implementation of the first identity in the embodiments of the present disclosure.

In a first implementation, the first identity may include a third identity for identifying one or more regions, and accordingly, the first model may be used within a region scope indicated by the third identity. The region may include, for example, any region level, such as a nation, a state, a province, a city, a county, or the like. Of course, in the embodiments of the present disclosure, the region may not be divided according to a division manner of the region level, and for example, the region may include a nation A and a province C of a nation B, which is not limited by the embodiments of the present disclosure.

In an example, the first identity includes a third identity for identifying a nation, and at this time, the third identity may be referred to as a nation identity or a region identity. In some implementations, N bits may be employed as the nation identity, for example, the nation identity may have 8 bits. In other implementations, N numbers may be employed as the nation identity, for example, the nation identity may be represented by a 3-digit decimal number, which is not limited by the embodiments of the present disclosure.

In an example, the first identity includes a third identity for identifying a region (for example, a state, a province, a city, a county, or the like), and at this time, the third identity may be referred to as a region identity. In some implementations, M bits may be employed as the region identity, for example, the region identity may have 8 bits. In other implementations, M numbers may be employed as the region identity, for example, the region identity may be represented by a 4-digit decimal number, which is not limited by the embodiments of the present disclosure.

It is to be noted that in some implementations, when the third identity is used to identify a plurality of regions, the plurality of g regions may correspond to different applicable scopes of the first model respectively. For example, if the plurality of regions may include a plurality of different nations, the third identity may include region identities corresponding to the plurality of nations, and accordingly, the first model may be used within the plurality of nations.

In other implementations, when the third identity is used to identify a plurality of regions, the plurality of regions may include a plurality of regions ranging from large to small region scopes. That is, the third identity includes region identities for the plurality of regions ranging from large to small region scopes. At this time, the plurality of regions may jointly indicate one applicable scope of the first model. For example, the plurality of regions may include a province B in the nation A, the third identity may include a region identity of the nation A and a region identity of the province B, and accordingly, the first model may be used within the province B in the nation A.

In addition, in the embodiments of the present disclosure, one region may correspond to one region identity. For example, the nation identity corresponding to nation A may be nation ID1. Of course, one region may correspond to a plurality of region identities, and for example, nation identities corresponding to the nation A may include nation ID1 and nation ID2.

In a second implementation, the first identity may include a fourth identity for identifying one or more organizations, and thus, the fourth identity may also be referred to as an organization identity. Accordingly, the first model may be used within an organization(s) corresponding to the fourth identity.

In some implementations, the above organization(s) may be an organization(s) associated with the first model, for example, the above organization may be an organization that provides the first model. Assuming that model A as the first model is provided by operator A, the above organization may include an organization corresponding to the operator A, and accordingly, an organization identity corresponding to the model A is used to identify the operator A.

As another example, the above organization(s) may be an organization(s) that optimizes the first model. Assuming that the model A as the first model is optimized by device A, the above organization may include an organization corresponding to device A, and accordingly, the organization identity corresponding to the model A is used to identify device A.

The specific representation manner of the organization identity is not limited by the embodiments of the present disclosure. In some implementations, K bits may be employed as the organization identity, for example, the organization identity may have 16 bits. In other implementations, K numbers may be employed as the organization identity, for example, the organization identity may be represented by a 6-digit decimal number.

In some scenarios, the first model may be optimized by different devices (e.g., the terminal device, the network device, etc.,) (for convenience of description, the device for optimizing model will hereinafter be simply referred to as an optimization device). Because different optimization devices use different optimization processes or optimization data when optimizing the first model, an optimized model may only be applicable locally to the optimization device. Or, results output by the model optimized by the optimization device have higher accuracy. Therefore, in the embodiments of the present disclosure, organization identities corresponding to models optimized by different optimization devices may be used to identify optimization devices, so that the optimized models may be used in the optimization devices locally, which is helpful to improve the accuracy of results output by the models, and avoids the problem that the accuracy of the results output by the optimized model is decreased since the optimization device is different from a device that uses the model. Of course, in the embodiments of the present disclosure, the optimized model may be used on other devices other than the optimization device without taking into account the above problem.

Assuming that original models running on device A and device B respectively are model A, in order to improve the accuracy of model A, device A optimizes model A and obtains version of model A. Then an organization ID corresponding to version of the model A may be used to identify the device A. In addition, in order to improve the accuracy of model A, device B optimizes model A and obtains version A2 of model A. Then an organization ID corresponding to version A2 of model A may be used to identify device B. In this way, version of model A may be used in device A, and version A2 of model A may be used in device B, which helps to improve the accuracy of the output results of different versions of optimized model A compared with that model A (i.e. version A1) optimized by device A running in device B may resulting in decreasing of the accuracy of the output of model A.

In the embodiments of the present disclosure, the above organization(s) may be, for example, one or more of an operator, a network device manufacturer, a terminal device manufacturer, and a third-party model provider, which is not limited by the embodiments of the present disclosure.

In some scenarios, the organization(s) associated with the first model may include a plurality of organizations, for example, scenarios in which the plurality of organizations jointly train, optimize, and use the first model. Accordingly, the fourth identity may be used to identify the plurality of organizations.

In some implementations, different orders of organization identities for the plurality of organizations included in the fourth identity may be used to identify different models. For example, an order of the plurality of organization identities included in the fourth identity corresponding to the model A is organization identity 1, organization identity 2, and organization identity 3. An order of the plurality of organization identities included in the fourth identity corresponding to the model B is organization identity 2, organization identity 1, and organization identity 3. At this time, the model A and the model B are different models. Of course, in the embodiments of the present disclosure, different orders of organization identities for the plurality of organizations included in the fourth identity may be used to identify the same model.

In the embodiments of the present disclosure, when the fourth identity is used to identify a plurality of organizations, the fourth identity may respectively include organization identities corresponding to each of the plurality of organizations, where each organization corresponds to an organization identity. Of course, in the embodiments of the present disclosure, when the fourth identity is used to identify a plurality of organizations, the fourth identity may include a joint organization identity used to identify the plurality of organizations, and the joint organization code may be obtained, for example, by jointly encoding organization identities of the plurality of organizations. The specific manner in which the fourth identity identifies the plurality of organizations is not limited by the embodiments of the present disclosure.

For example, the joint organization identity may have 10 bits and may represent up to 1024 different combinations of organizations. As another example, the joint organization identity may include 3 decimal numbers, which may represent up to 1000 different combinations of organizations.

In some implementations, the first public identity may include a second identity, where the second identity is used to identify a model scheme of the first model, and thus, the second identity may also be referred to as a model scheme identity.

In the embodiments of the present disclosure, the second identity may identify the model in terms of a serial number of the model, a task for the model, a characteristic attribute of the model, and the like. In order to facilitate understanding, the fifth identity, the sixth identity, and the seventh identity will be described below, respectively. It is to be noted that the fifth identity, the sixth identity, and the seventh identity may be used alone or in combination with each other, which is not limited by the embodiments of the present disclosure.

In an example, the second identity includes a fifth identity. The fifth identity is used to identify the serial number of the first model, or the fifth identity is used to represent the serial number of the first model.

The specific implementation form of the fifth identity is not limited by the embodiments of the present disclosure. In some implementations, the fifth identity may have N1 bits, for example, the fifth identity may have 16 bits. Of course, in the embodiments of the present disclosure, the fifth identity may be represented by N1 numbers, and for example, the fifth identity may include four decimal numbers. For ease of understanding, the fifth identity in the embodiments of the present disclosure will be described below with reference to Table 1 to Table 2.

Assuming that 16 bits are used to represent the fifth identity, as illustrated in Table 1, if the fifth identity is 0001, it may be used to identify model 1; if the fifth identity is 0010, it may be used to identify model 2; if the fifth identity is 1001, it may be used to identify model 3; and if the fifth identity is 1100, it may be used to identify model 4.

**Table 1**

| Fifth identity | Model scheme |
|---|---|
| 0001 | Model 1 |
| 0010 | Model 2 |
| 1001 | Model 3 |
| 1100 | Model 4 |

Assuming that 4 decimal numbers are used to represent the fifth identity, as illustrated in Table 2, if the fifth identity is 0001, it may be used to identify model 1. If the fifth identity is 0002, it may be used to identify model 2. If the fifth identity is 0023, it may be used to identify model 3. If the fifth identity is 0057, it may be used to identify model 4.

**Table 2**

| Fifth identity | Model scheme |
|---|---|
| 0001 | Model 1 |
| 0010 | Model 2 |
| 1001 | Model 3 |
| 1100 | Model 4 |

In an example, the second identity including a sixth identity. The sixth identity is used to identify the task for the first model, or the sixth identity is used to represent the task for the first model.

In some implementations, the task for the first model may be understood as a task(s) executed by the first model, and therefore, the sixth identity may also be referred to as a "task identity". The above tasks may include one or more of a CSI feedback enhancement task, a beam management task, a positioning task, a channel estimation task, an encoding and decoding task, and a mobility management task.

The specific implementation form of the sixth identity is not limited by the embodiments of the present disclosure. In some implementations, the sixth identity may have N2 bits, for example, the sixth identity may have 8 bits, and may represent up to 256 different tasks. Of course, in the embodiments of the present disclosure, the sixth identity may be represented by N2 numbers, and for example, the sixth identity may include four decimal numbers. For ease of understanding, the sixth identity in the embodiments of the present disclosure will be described below with reference to Table 3 to Table 4.

Assuming that 8 bits are used to represent the sixth identity, as illustrated in Table 3, if the sixth identity is 00000001, it may be used to identify the task for the model is the CSI feedback enhancement. If the sixth identity is 00000010, it may be used to identify the task for the model is the beam management. If the sixth identity is 00000011, it may be used to identify the task for the model is the positioning management. If the sixth identity is 00000100, it may be used to identify the task for the model is the channel estimation. If the sixth identity is 00000101, it may be used to identify the task for the model is the encoding and decoding. If the sixth identity is 00000110, it may be used to identify the task for the model is the mobility management. If the sixth identity is any one of 00100100, 01010110, and 11001100, the identified task for the model is yet to be determined, that is, 00100100, 01010110, and 11001100 may be reserved identities.

**Table 3**

| Sixth identity | Task for the model |
|---|---|
| 00000001 | CSI Feedback Enhancement |
| 00000010 | Beam Management |
| 00000011 | Positioning Enhancement |
| 00000100 | Channel estimation |
| 00000101 | Encoding and Decoding |
| 00000110 | Mobility Management |
| 00100100 | Reserved |
| 01010110 | Reserved |
| 11001100 | Reserved |

Assuming that 4 decimal numbers are used to represent the sixth identity, as illustrated in Table 4, if the sixth identity is 0001, it may be used to identify the task for the model is the CSI feedback enhancement. If the sixth identity is 0002, it may be used to identify the task for the model is the positioning management. If the sixth identity is 0023 or 0057, the identified task for the model is yet to be determined, that is, 0023 or 0057 may be reserved identities.

**Table 4**

| Sixth identity | Task for the model |
|---|---|
| 0001 | CSI Feedback Enhancement |
| 0002 | Positioning Enhancement |
| 0023 | Reserved |
| 0057 | Reserved |

In other implementations, the task for the first model may further include a sub-task(s) of the task(s) executed by the first model, or a function(s) of the task(s) executed by the first model, and therefore, the sixth identity may also be referred to as a "function identity".

It is to be noted that, in the embodiments of the present disclosure, the sub-task(s) identified by the above sixth identity may be one or more sub-tasks. For example, if the first model is used to perform CSI feedback enhancement, the above sub-task(s) may include one or more of CSI compression, CSI prediction, and CSI prediction and CSI compression. For another example, if the first model is used to perform beam management, the above sub-task(s) may include beam selection and/or beam prediction. For another example, if the first model is used for positioning enhancement, the above sub-task(s) may include direct positioning and/or indirect positioning.

The specific implementation form of the sixth identity is not limited by the embodiments of the present disclosure. In some implementations, the sixth identity may have N2 bits, for example, the sixth identity may have 6 bits, and may represent up to 64 different sub-tasks. Of course, in the embodiments of the present disclosure, the sixth identity may be represented by N2 numbers, and for example, the sixth identity may include four decimal numbers, and may represent up to 10000 different sub-tasks. For ease of understanding, the sixth identity in the embodiments of the present disclosure will be described below with reference to Table 5 to Table 6.

Assuming that 6 bits are used to represent the sixth identity, and the first model is used to perform CSI feedback enhancement, as illustrated in Table 5, if the sixth identity is 00000001, it may be used to identify the sub-task for the model is CSI compression. If the sixth identity is 00000010, it may be used to identify the sub-task for the model is CSI prediction. If the sixth identity is 00000011, it may be used to identify the sub-task for the model is CSI compression and CSI prediction. If the sixth identity is 10010011, the identified sub-task for the model is yet to be determined, that is, 10010011 may be a reserved identity.

**Table 5**

| Sixth identity | Sub-task |
|---|---|
| 00000001 | CSI Compression |
| 00000010 | CSI Prediction |
| 00100011 | CSI Compression and CSI Prediction |
| 10010011 | Reserved |

Assuming that 4 decimal numbers are used to represent the sixth identity, and the first model is used to perform CSI feedback enhancement, as illustrated in Table 6, if the sixth identity is 0001, it may be used to identify the sub-task for the model is CSI compression. If the sixth identity is 0002, it may be used to identify the sub-task for the model is CSI prediction. If the sixth identity is 0023 or 0057, the identified sub-task for the model is yet to be determined, that is, 0023 or 0057 may be reserved identities.

**Table 6**

| Sixth identity | Sub-task |
|---|---|
| 0001 | CSI Compression |
| 0002 | CSI Prediction |
| 0023 | Reserved |
| 0057 | Reserved |

In an example, the second identity includes a seventh identity. The seventh identity is used to identify a characteristic attribute of the first model, or the seventh identity is used to represent the characteristic attribute of the first model.

The above characteristic attributes of the first model may include, for example, one or more of a model structure of the first model, a model platform for the first model, an interface for the first model, performance of the first model, training data for the first model, a quantization manner for the first model, a complexity of the first model, and a size of the first model. The characteristic attributes are not specifically limited by the embodiments of the present disclosure, and will be described hereinafter in conjunction with an eighth identity to a fifteenth identity respectively, which will not be repeated here for the sake of brevity.

The specific implementation form of the seventh identity is not limited by the embodiments of the present disclosure. In some implementations, the seventh identity may have N3 bits, for example, the seventh identity may have 8 bits, and may represent up to 256 different characteristic attributes. Of course, in the embodiments of the present disclosure, the seventh identity may be represented by N3 numbers, and for example, the seventh identity may include 4 decimal numbers.

In an example, the seventh identity includes an eighth identity, and the eighth identity is associated with the model structure of the first model. For example, the eighth identity is used to identify the model structure of the first model, or the eighth identity is used to indicate the model structure of the first model. Therefore, the eighth identity may also be referred to as a "model structure identity".

The above model structure is also referred to as a model type, and may include, for example, any one of a CNN, a DNN, a ResNet, a Transformer, a Mixer, an autoencoder, a CsiNet, an EVCsiNet, and an EVCsiNet-T. Of course, in the embodiments of the present disclosure, the above model type may also include a model type newly introduced in the future, which is not limited by the embodiments of the present disclosure.

The specific implementation form of the eighth identity is not limited by the embodiments of the present disclosure. In some implementations, the eighth identity may have N4 bits, for example, the eighth identity may have 8 bits, and may represent up to 256 different model structures. Of course, in the embodiments of the present disclosure, the eighth identity may be represented by N4 numbers, and for example, the eighth identity may include 3 decimal numbers, and may represent up to 1000 different model structures.

In an example, the seventh identity includes a ninth identity, and the ninth identity is associated with the model platform for the first model. For example, the ninth identity is used to identify the model platform for the first model, or the ninth identity is used to indicate the model platform for the first model. Therefore, the ninth identity may also be referred to as a "model platform identity".

In some implementations, the above model platform may include any one of TensorFlow, PyTorch, ONNX, Caffe2, MXNet, ML.NET, TensorRT, Microsoft CNTK. Of course, in the embodiments of the present disclosure, the above model platform may also include a model platform newly introduced in the future, which is not limited by the embodiments of the present disclosure.

The specific implementation form of the ninth identity is not limited by the embodiments of the present disclosure. In some implementations, the ninth identity may have N5 bits, for example, the ninth identity may have 8 bits, and may represent up to 256 different model platforms. Of course, in the embodiments of the present disclosure, the ninth identity may be represented by N5 numbers, and for example, the ninth identity may include 3 decimal numbers, and may represent up to 1000 different model platforms.

In an example, the seventh identity includes a tenth identity, and the tenth identity is associated with the interface for the first model. In some implementations, the tenth identity is used to identify the interface for the first model, or the tenth identity is used to indicate the interface for the first model. Therefore, the tenth identity may also be referred to as an "interface identity". In other implementations, the tenth identity is used to identify an interface format of the first model, or the tenth identity is used to indicate the interface format of the first model.

In some implementations, the interface format of the first model may include a size of input data of the first model, a format of input data of the first model, a size of an output result of the first model, and a format of the output result of the first model. For example, the interface format of the first model may include one or more of a transmission antenna dimension, a reception antenna dimension, a bandwidth dimension, a sub-band dimension, the number of air interface feedbacks, the number of positioning information measurements for the network device, and the number of measurements for beams.

The specific implementation form of the tenth identity is not limited by the embodiments of the present disclosure. In some implementations, the tenth identity may have N6 bits, for example, the tenth identity may have 7 bits, and may represent up to 128 different interfaces. Of course, in the embodiments of the present disclosure, the tenth identity may be represented by N6 numbers, and for example, the tenth identity may include 2 decimal numbers, and may represent up to 100 different interfaces.

In some scenarios, the first model may support a plurality of interfaces, for example, the plurality of interfaces supported by the first model may include an input interface 1 and an output interface 1. At this time, the above tenth identity may be used to identify a plurality of interfaces supported by the first model. In some implementations, the above tenth identity may include interface identities for each of the plurality of interfaces. For example, the first model supports interface 1 and interface 2, and accordingly, the tenth identity may include an interface identity of interface 1 and an interface identity of interface 2. Of course, in the embodiments of the present disclosure, the above tenth identity may include a joint interface identity of a plurality of interfaces, and the joint interface identity may be obtained, for example, by jointly encoding the interface identity of each of the plurality of interfaces. For example, the first model supports interface 1 and interface 2, and accordingly, the tenth identity may include a joint interface identity for interface 1 and interface 2.

The specific implementation form of the joint interface identity is not limited by the embodiments of the present disclosure. In some implementations, the joint interface identity may have N7 bits, for example, the tenth identity may have 7 bits, and may represent up to 128 different interface combinations. Of course, in the embodiments of the present disclosure, the tenth identity may be represented by N7 numbers, and for example, the tenth identity may include 2 decimal numbers, and may represent up to 100 different combinations of interfaces.

In an example, the seventh identity includes an eleventh identity, and the eleventh identity is associated with the performance of the first model. In some implementations, the eleventh identity is used to identify the performance of the first model, or the eleventh identity is used to indicate the performance of the first model. Therefore, the eleventh identity may also be referred to as a "performance identity".

For example, the performance of the first model described above may include different levels of CSI recovery accuracy. For another example, the performance of the first model described above may include different levels of CSI prediction accuracy. For another example, the performance of the first model described above may include different levels of beam selection accuracy. For another example, the performance of the first model described above may include different levels of beam prediction accuracy. For another example, the performance of the first model described above may include different levels of positioning accuracy. For another example, the performance of the first model described above may include different levels of channel estimation accuracy. For another example, the performance of the first model may include different levels of system throughput efficiency enabled by the first model. For another example, the performance of the first model may include different levels of BLER caused by the first model. For another example, the performance of the first model may include different levels of handover failure counts caused by the first model. For another example, the performance of the first model may include different levels of ping-pong handover counts caused by the first model, which is not limited by the embodiments of the present disclosure.

The specific implementation form of the eleventh identity is not limited by the embodiments of the present disclosure. In some implementations, the eleventh identity may have N7 bits, for example, the eleventh identity may have 4 bits, and may represent up to 16 different performances. Of course, in the embodiments of the present disclosure, the eleventh identity may be represented by N7 numbers, and for example, the eleventh identity may include 1 decimal number, and may represent up to 10 different performances.

In an example, the seventh identity includes a twelfth identity, and the twelfth identity is associated with the training data for the first model. For example, the twelfth identity is used to identify a data amount of the training data for the first model, or the twelfth identity is used to indicate the data amount of the training data for the first model. In other implementations, the twelfth identity is used to identify a data type of training data for the first model, or the twelfth identity is used to indicate the data type of the training data for the first model. Therefore, the twelfth identity may also be referred to as a "training data identity".

The specific implementation form of the twelfth identity is not limited by the embodiments of the present disclosure. In some implementations, the twelfth identity may have N8 bits, for example, the twelfth identity may have 7 bits, and may represent up to 128 different pieces of training data. Of course, in the embodiments of the present disclosure, the twelfth identity may be represented by N8 numbers, and for example, the twelfth identity may include 2 decimal numbers, and may represent up to 100 different pieces of training data.

In an example, the seventh identity includes a thirteenth identity, and the thirteenth identity is associated with the quantization manner for the first model. For example, the thirteenth identity is used to identify the quantization manner for the first model, or the thirteenth identity is used to indicate the quantization manner for the first model. Therefore, the thirteenth identity may also be referred to as a "quantization manner identity". For another example, the thirteenth identity is used to identify a dequantization manner for the first model, or the thirteenth identity is used to indicate the dequantization manner for the first model. Of course, in the embodiments of the present disclosure, the thirteenth identity may also be used to identify an overhead of the quantization manner, or the thirteenth identity may also be used to identify an accuracy of the quantization manner, which is not limited by the embodiments of the present disclosure.

The quantization manner is not specifically limited by the embodiments of the present disclosure. For example, the quantization manner may include one or more of vector quantization, scalar quantization, uniform quantization, non-uniform quantization, and AI-based quantization. Of course, in the embodiments of the present disclosure, the above quantization manner may also include a quantization manner newly introduced in the future.

The specific implementation form of the thirteenth identity is not limited by the embodiments of the present disclosure. In some implementations, the thirteenth identity may have N9 bits, for example, the thirteenth identity may have 4 bits, and may represent up to 16 different quantization manners. Of course, in the embodiments of the present disclosure, the thirteenth identity may be represented by N9 numbers, and for example, the thirteenth identity may include 2 decimal numbers, and may represent up to 100 different quantization manners.

In an example, the seventh identity includes a fourteenth identity, and the fourteenth identity is associated with the model complexity of the first model. In some implementations, the fourteenth identity is used to identify the model complexity of the first model, or the fourteenth identity is used to indicate the model complexity of the first model. Therefore, the fourteenth identity may also be referred to as a "model complexity identity". In other implementations, the fourteenth identity is used to identify a decoding model complexity of the first model, or the fourteenth identity is used to indicate the decoding model complexity of the first model. Of course, in the embodiments of the present disclosure, the fourteenth identity may also be used to identify an overhead of the model complexity, or the fourteenth identity may also be used to identify an accuracy of the model complexity, which is not limited by the embodiments of the present disclosure.

The model complexity is not specifically limited by the embodiments of the present disclosure. For example, the model complexity may include one or more of vector quantization, scalar quantization, uniform quantization, non-uniform quantization, and AI-based quantization. Of course, in the embodiments of the present disclosure, the above model complexity may also include a model complexity newly introduced in the future.

The specific implementation form of the fourteenth identity is not limited by the embodiments of the present disclosure. In some implementations, the fourteenth identity may have N10 bits, for example, the fourteenth identity may have 4 bits, and may represent up to 16 different model complexities. Of course, in the embodiments of the present disclosure, the fourteenth identity may be represented by N10 numbers, and for example, the fourteenth identity may include 2 decimal numbers, and may represent up to 100 different model complexities.

In an example, the seventh identity includes a fifteenth identity, and the fifteenth identity is associated with the size of the first model. In some implementations, the fifteenth identity is used to identify the size of the first model. For example, the fifteenth identity is used to indicate a level to which the size of the first model corresponds. Therefore, the fifteenth identity may also be referred to as a "size level identity".

The specific implementation form of the fifteenth identity is not limited by the embodiments of the present disclosure. In some implementations, the fifteenth identity may have N11 bits, for example, the fifteenth identity may have 4 bits, and may represent up to 16 different sizes. Of course, in the embodiments of the present disclosure, the fifteenth identity may be represented by N11 numbers, and for example, the fifteenth identity may include 2 decimal numbers, and may represent up to 100 different sizes.

It is to be noted that, in some implementations, the various identities described above may be used separately. Assuming that an applicable scope of the model A is within an applicable scope corresponding to the operator A, and other operators do not use the model A, at this time, the public identity of the model A may not include the organization identity corresponding to the operator A, but only include the fifth identity used to identify the serial number of the model A.

In other implementations, the various identities described above may also be used in conjunction with each other. In order to facilitate understanding, the following introduces the combination of organization identity and task identity as an example. It is to be noted that the schemes of combinations of other identities are similar to the scheme of the combination of organization identity and task identity, and they will not be listed one by one below for the sake of brevity.

For example, assuming that organization A needs to determine a public identity of model A and organization B needs to determine a public identity of model B, where the tasks performed by model A and model B are the same. At this time, if the model A and model B are identified only by using task identity as the public identity, the obtained public identities of model A and model B may be the same, resulting in conflict of public identities. Then, in order for the public identity to identify the model uniquely, the organization identity and the task identity may be used as the public identity to identify the model. Since organization A and organization B correspond to different organization identities respectively, the model A and the model B can be identified uniquely by using the public identity containing the organization identities.

As described above, the model may be uniquely identified by the public identity, which helps to ensure that the model can be determined by the public identity within the applicable scope of the model (for example, within global scope, within specific national scope, within region scope, or within organization scope). However, in some scenarios, a large number of models may be included in the applicable range of the model. Therefore, if it is desired to uniquely identify the model by the public identity to avoid a situation that different models correspond to the same public identity, the public identity usually needs to occupy a large number of bits, resulting in a large number of air interface resources required for transmitting the public identity. Especially when the public identity is transmitted through control information (e.g., DCI or UCI), the overhead of transmitting the control information will increase dramatically.

On the other hand, although there will be many models within the applicable scope of the model, for users (for example, a network, a network device, and a terminal device) of the model, the number of models they can use is relatively small. At this time, if the public identity is still used to indicate the model for users of the model, more air interface resources are required during transmission of the public identity.

Therefore, in order to avoid the above problems, the embodiments of the present disclosure further provide a local identity for indicating the model. Since the local identity only needs to identify the model locally by the model user, the number of models that needs to be identified by the local identity is smaller compared with the public identity, that is, the number of bits occupied by the local identity is smaller than the number of bits occupied by the public identity, which is helpful to reduce the air interface resources required for indicating the model. Of course, in the embodiments of the present disclosure, the number of bits occupied by the local identity may be greater than or equal to the number of bits occupied by the public identity, which is not limited by the embodiments of the present disclosure.

In some implementations, the above first information may include a first local identity, where the first local identity may be associated with the first model, or the first local identity is used to identify the first model. Of course, in the embodiments of the present disclosure, the first local identity may be associated with the first public identity, so that the first local identity may indicate the first model through the associated first public identity.

The specific implementation manner of the association relationship between the local identities and the public identities is not limited by the embodiments of the present disclosure, and in some implementations, the above association relationship may be expressed in the form of table. For ease of understanding, it is described below in conjunction with Table 7.

As illustrated in Table 7, a public identity used to identify model 1 is 1024060120235536, and a local identity corresponding to the public identity is 01. A public identity used to identify model 2 is 3051830524947264, and a local identity corresponding to the public identity is 02. A public identity used to identify model 3 is 4633823385957274, and a local identity corresponding to the public identity is 03. A public identity used to identify model 4 is 9488472901948372, and a local identity corresponding to the public identity is 04.

**Table 7**

| Model | Public identity | Local identity |
|---|---|---|
| Model 1 | 1024060120235536 | 01 |
| Model 2 | 3051830524947264 | 02 |
| Model 3 | 4633823385957274 | 03 |
| Model 4 | 9488472901948372 | 04 |

In some implementations, the first local identity may include a local identity corresponding to an operator, a local identity corresponding to a network device, a local identity corresponding to a terminal device, and a local identity corresponding to a region.

In an example, the first local identity includes the local identity corresponding to the operator. It can be understood that a conversion of the public identity to the local identity may be a conversion at an operator level, that is, a public identity of a model usable in the operator is converted to a local identity.

In an example, the first local identity includes the local identity corresponding to the network device. It can be understood that a conversion of the public identity to the local identity may be a conversion at a network device level, that is, a public identity of a model usable in the network device is converted to a local identity.

In an example, the first local identity including the local identity corresponding to the terminal device. It can be understood that a conversion of the public identity to the local identity may be a conversion at a terminal device level, that is, a public identity of a model usable in the terminal device is converted to a local identity.

In an example, the first local identity including the local identity corresponding to the region. It can be understood that a conversion of the public identity to the local identity may be a conversion at a region level, that is, a public identity of a model applicable within the region is converted to a local identity. The region may refer to the above description, and the region may include, for example, a nation, a state, a province, a city, a county, and the like, which is not limited by the embodiments of the present disclosure.

A generation manner of the above association relationship is not limited by the embodiments of the present disclosure. For example, the association relationship may be configured by the first device or the second device. For another example, the above association relationship may be predefined, for example, by one or more of an association device corresponding to the operator or the region, the network device, and the terminal device.

It is to be noted that for different model users (for example, the first device and the second device), local identities corresponding to the same model may be different. For example, for the first device, a local identity of the model A may be local identity 1, and for the second device, a local identity of the model A may be local identity 2. Of course, in the embodiments of the present disclosure, local identities corresponding to the same model may be the same for different model users. For example, for the first device, a local identity of the model A may be local identity 1, and for the second device, a local identity of the model A may be local identity 1.

That is, when the first device and the second device do not belong to the same operator network, an association relationship between the local identities and the public identities maintained by the first device and an association relationship between the local identities and the public identities maintained by the second device may not affect each other, and therefore, the association relationship maintained by the first device and the association relationship maintained by the second device may be the same or different.

In the embodiments of the present disclosure, the first model may be indicated by transmitting the first information between model users, for example, the first device may send the first information to the second device. In some scenarios, if the first device indicates the first model through the first local identity, the first device may indicate the association relationship between the first public identity and the first local identity to the second device through the second information, so that the second device can determine the first public identity through the first local identity and the association relationship, and then determine the first model through the first public identity.

The second information is not limited by the embodiments of the present disclosure. In some implementations, the second information may be transmitted by signaling, where the signaling may include, for example, one or more of uplink control information (UCI), downlink control information (DCI), a medium access control control unit (MAC CE), a radio resource control (RRC) signaling, a RRC reconfiguration message, a system broadcast, a master information block (MIB), a system information block (SIB), and SIB1. In other implementations, the second information may be transmitted as data, i.e., the second information may be transmitted over a data channel, where the data channel may include, for example, one or more of a physical downlink shared channel (PDSCH), a physical uplink shared channel (PUSCH), and a physical sidelink shared channel (PSSCH).

It is to be noted that, in the embodiments of the present disclosure, the first information and the second information may be transmitted independently of each other, or the first information and the second information may be transmitted together, which is not limited by the embodiments of the present disclosure. In addition, if the first information and the second information are transmitted independently, an order of transmission of the first information and the second information is not limited by the embodiments of the present disclosure. For example, the first information may be transmitted before the second information is transmitted. As another example, the second information may be transmitted before the first information is transmitted.

In addition, in the embodiments of the present disclosure, the second device may be the terminal device or the network device. The network device may include an access network device and a core network device. Based on the above description of the first device, it can be seen that if both the first device and the second device are terminal devices, the above information (the first information and/or the second information) may be transmitted between the terminal devices. If both the first device and the second device are network devices, the above information (the first information and/or the second information) may be transmitted between the network devices. If the first device is a network device and the second device is a terminal device, as illustrated in FIG. 11, the above information (the first information and/or the second information) may be transmitted from the network device to the terminal device. If the first device is the terminal device and the second device is the network device, as illustrated in FIG. 12, the above information (first information and/or second information) may be transmitted from the terminal device to the network device.

The scenario in which the above information is transmitted is not limited by the embodiments of the present disclosure. In some implementations, the above information may be transmitted during use of the first model. For another example, the above information may be transmitted when the first model is updated. For another example, the above information may be transmitted when managing the first model, where managing the first model may include, for example, activating the first model and/or deactivating the first model.

For example, the network device may use the first model locally and associate the first model by a local identity. Then, during use, management, update of the first model, the network device may indicate the first model to the terminal device through the local identity of the first model.

It is to be notes that, in the above scenario, the association relationship between the local identities and the public identities of the first model may be maintained by the network device. For the terminal device, the terminal device may not need to be aware of the above association relationship, or the association relationship may remain invisible over the air interface. Of course, in the embodiments of the present disclosure, the terminal device may acquire the above association relationship.

For another example, the terminal device may use the first model locally and associate the first model by a local identity. Then, during use, management, update of the first model, the terminal device may indicate the first model to the network device through the local identity of the first model.

It is to be noted that, in the above scenario, the association relationship between the local identities and the public identities of the first model may be maintained by the terminal device. For the network device, the network device may not need to be aware of the above association relationship, or the association relationship may remain invisible over the air interface. Of course, in the embodiments of the present disclosure, the network device may acquire the above association relationship.

For another example, if the network device wants to deliver the first model to the terminal device for use, the network device may associate the first model through a local identity. The network device may then indicate the first model to the terminal device by the local identity associated with the first model.

It is to be noted that, in the above scenario, the association relationship between the local identities and the public identities of the first model may be maintained by the network device. For the terminal device, the terminal device may not need to be aware of the above association relationship, or the association relationship may remain invisible over the air interface. Of course, in the embodiments of the present disclosure, the terminal device may be informed of the above association relationship.

For another example, if the terminal device wants to deliver the first model to the network device for use, at this time, the terminal device may associate the first model through a local identity. The terminal device may then indicate the first model to the network device by the local identity associated with the first model.

It is to be noted that, in the above scenario, the association relationship between the local identities and the public identities of the first model may be maintained by the network device. For the terminal device, the terminal device may not need to be aware of the above association relationship, or the association relationship may remain invisible over the air interface. Of course, in the embodiments of the present disclosure, the terminal device may be informed of the above association relationship.

For another example, the network device may directly indicate the first model for the terminal device through the local identity, and accordingly, the terminal device may confirm the first model based on the local identity, and download the first model.

It is to be noted that in the above scenario, for the terminal device, the terminal device needs to download the first model. Therefore, the terminal device needs to determine the public identity of the first model based on the association relationship between the local identities and the public identities, as well as the local identity of the first model, and download the first model based on the public identity of the first model. At this time, the association relationship is visible over the air interface. Of course, in the embodiments of the present disclosure, if the terminal device may determine the first model only by the local identity, the terminal device may not be informed of the above association relationship.

For another example, the terminal device may directly indicate the first model for the network device through the local identity, and accordingly, the network device may determine the first model based on the local identity, and download the first model.

It is to be noted that in the above scenario, for the network device, the network device needs to download the first model. Therefore, the network device needs to determine the public identity of the first model based on the association relationship between the local identities and the public identities, as well as the local identity of the first model, and download the first model based on the public identity of the first model. At this time, the association relationship is visible over the air interface. Of course, in the embodiments of the present disclosure, if the network device may determine the first model only by the local identity, the network device may not be informed of the above association relationship.

Additionally, in some implementations, in response to receiving the first information, the second device (e.g., the terminal device or the network device) may download the first model. The download may include online download or offline download, which is not limited by the embodiments of the present disclosure.

As described above, the embodiments of the present disclosure may involve one or more of the following association relationships: an association relationship between local identities and models, an association relationship between local identities and public identities, and an association relationship between public identities and models. In some scenarios, the above association relationship may need to be changed, or the above association relationship may need to be modified. Therefore, in order to make the first device and the second device have consistent understanding of the association relationship, the first device may indicate the change of the association relationship to the second device through the third information.

That is, in some implementations, the method further includes the following operation. The first device sends third information to a second device. The third information is used to indicate one or more of the following: a change in an association relationship between the first local identity and the first model; a change in an association relationship between the first local identity and the first public identity; or a change in an association relationship between the first public identity and the first model.

It is to be noted that, in the embodiments of the present disclosure, the change in the association relationship may include one or more of: addition of the association relationship, deletion of the association relationship, and update of the association relationship, which is not limited by the embodiments of the present disclosure.

In some implementations, taking the association relationship including an association relationship between local identifies and models as an example, the change of the association relationship may include change of a local ID corresponding to one model or a set of models. For example, the local identity corresponding to one model or a set of models may be changed from local identity 1 to local identity 2.

In some implementations, taking the association relationship including an association relationship between public identities and local identities as an example, the change of the association relationship may include a change of a public identity corresponding to one model or a set of models. For example, a public identity corresponding to one local identity or a set of local identities may be changed from a public identity 1 to a public identity 2.

In some implementations, taking the association relationship including an association relationship between public identities and local identities as an example, the change of the association relationship may include change of a model corresponding to one local identity or a set of local identities. For example, a model corresponding to one local identity or a set of local identities may be changed from model 1 to model 2.

It is to be noted that the third information is not limited by the embodiments of the present disclosure. In some implementations, the third information may be transmitted by signaling, where the signaling may include, for example, one or more of UCI, DCI, MAC CE, RRC signaling, RRC reconfiguration message, system broadcast, MIB, SIB1, SIB. In other implementations, the third information may be transmitted as data, i.e., the third information may be transmitted over a data channel, where the data channel may include, for example, one or more of a PDSCH, a PUSCH, and a PSSCH.

In some scenarios, deletion may be performed on an identity (e.g., a public identity and/or a local identity) associated with the model. Therefore, in order to make the first device and the second device have consistent understanding of the identity, the first device may indicate the second device the deletion of the identity through the fourth information.

That is, the above method further includes the following operation. The first device sends fourth information to a second device. The fourth information is used to indicate one or more of the following: deletion of the first local identity; or deletion of the first public identity.

It is to be noted that, in the embodiments of the present disclosure, the model corresponding to the deleted identity may no longer be used by the second device. Of course, in the embodiments of the present disclosure, the model corresponding to the deleted identity may no longer be used by the first device, or the model corresponding to the deleted identity may be used by the first device, which is not limited by the embodiments of the present disclosure.

For example, the first device may send fourth information to the second device, the fourth information is used to indicate that one local identity or a set of local identities are deleted. Accordingly, after the second device deletes one local identity or a set of local identities, the model associated with the one local identity or the set of local identities is no longer used by the second device.

For another example, the first device may send fourth information to the second device, the fourth information is used to indicate that one public identity or a set of public identities are deleted. Accordingly, after the second device deletes one public identity or a set of public identities, the model associated with the one public identity or the set of public identities is no longer used by the first device and the second device.

It is to be noted that the fourth information is not limited by the embodiments of the present disclosure. In some implementations, the fourth information may be transmitted by signaling, where the signaling may include, for example, one or more of UCI, DCI, MAC CE, RRC signaling, RRC reconfiguration message, system broadcast, MIB, SIB1, SIB. In other implementations, the fourth information may be transmitted as data, i.e., the fourth information may be transmitted over a data channel, where the data channel may include, for example, one or more of a PDSCH, a PUSCH, and a PSSCH.

In some scenarios, new addition may be performed on an identity (e.g., a public identity and/or a local identity) associated with the model. Therefore, in order to make the first device and the second device have consistent understanding of the identity, the first device may indicate the second device the new addition of the identity through the fifth information.

That is, the above method further includes the following operation. A first device sends fifth information to a second device. The fifth information is used to indicate one or more of the following: new addition of the first local identity; or new addition of the first public identity.

It is to be noted that, in the embodiments of the present disclosure, a model corresponding to the newly added identity may be used by the second device. Of course, in the embodiments of the present disclosure, the model corresponding to the newly added identity may also be used by the first device, which is not limited by the embodiments of the present disclosure.

For example, the first device may send fifth information to the second device, and the fifth information is used to indicate new addition of one local identity or a set of local identities is newly added, and a model associated with the one local identity or the set of local identities newly added. Accordingly, the second device stores an association relationship between the one local identity or the set of local identities newly added and the model.

For another example, the first device may send fifth information to the second device, and the fifth information is used to indicate new addition of one local identity or a set of local identities, and a public identity associated with the one local identity or the set of local identities newly added. Accordingly, the second device stores an association relationship between the one local identity or the set of local identities newly added and the public identity.

For another example, the first device may send fifth information to the second device, and the fifth information is used to indicate new addition of one public identity or a set of public identities, and a model associated with the one public identity or the set of public identities newly added. Accordingly, the second device stores an association relationship between the one public identity or the set of public identities newly added and the model.

For another example, the first device may send fifth information to the second device, and the fifth information is used to indicate new addition of one public identity or a set of public identities, and a local identity associated with the one public identity or the set of public identities newly added. Accordingly, the second device stores an association relationship between the one public identity or the set of public identities newly added and the local identity.

It is to be noted that the fifth information is not limited by the embodiments of the present disclosure. In some implementations, the fifth information may be transmitted by signaling, where the signaling may include, for example, one or more of UCI, DCI, MAC CE, RRC signaling, RRC reconfiguration message, system broadcast, MIB, SIB1, SIB. In other implementations, the fifth information may be transmitted as data, i.e., the fifth information may be transmitted over a data channel, where the data channel may include, for example, one or more of a PDSCH, a PUSCH, and a PSSCH.

The method embodiments of the present disclosure have been described in detail above with reference to FIG. 1 to FIG. 12, and apparatus embodiments of the present disclosure will be described in detail below with reference to FIG. 13 to FIG. 15. It is to be understood that the description of the method embodiments and the description of the apparatus embodiments correspond to each other and therefore portions not described in detail may be referred to the preceding method embodiments.

FIG. 13 is a schematic diagram of a communication device according to an embodiment of the present disclosure, and the communication device 1300 illustrated in FIG. 13 is a first device. The communication device 1300 illustrated in FIG. 13 includes a determining unit 1310.

The determining unit 1310 is configured to determine first information. The first information includes one or more of the following: a first public identity, associated with a first model for wireless communication; or a first local identity, associated with the first model and/or the first public identity.

In some implementations, the first public identity includes one or more of the following: a first identity, used for identifying an applicable scope of the first model; or a second identity, used for identifying a model scheme for the first model.

In some implementations, the first identity includes one or more of the following: a third identity, used for identifying one or more regions; or a fourth identity, used for identifying one or more organizations.

In some implementations, the third identity includes region identities for a plurality of regions ranging from large to small region scopes.

In some implementations, the fourth identity is used for identifying one or more of the following organizations: an organization that provides the first model; or an organization that optimizes the first model.

In some implementations, the second identity includes one or more of the following: a fifth identity, used for identifying a serial number of the first model; a sixth identity, used for identifying a task for the first model; or a seventh identity, used for identifying a characteristic attribute of the first model.

In some implementations, the seventh identity includes one or more of the following identities: an eighth identity, associated with a model structure of the first model; a ninth identity, associated with a model platform for the first model; a tenth identity, associated with an interface for the first model; an eleventh identity, associated with performance of the first model; a twelfth identity, associated with training data for the first model; a thirteenth identity, associated with a quantization manner for the first model; a fourteenth identity, associated with model complexity of the first model; or a fifteenth identity, associated with a size of the first model.

In some implementations, the first public identity is used to identify the first model uniquely within a first scope.

In some implementations, the first scope includes one of the following: global scope, national scope, region scope, or organization scope.

In some implementations, a number of bits occupied by the first local identity is less than a number of bits occupied by the first public identity.

In some implementations, the device further includes a first sending unit. The first sending unit is configured to send the first information to a second device.

In some implementations, the device further includes a second sending unit. The second sending unit is configured to send second information to a second device. The second information is used to indicate an association relationship between the first public identity and the first local identity.

In some implementations, the device further includes a third sending unit. The third sending unit is configured to send third information to a second device. The third information is used to indicate one or more of the following: a change in an association relationship between the first local identity and the first model; a change in an association relationship between the first local identity and the first public identity; or a change in an association relationship between the first public identity and the first model.

In some implementations, the device further includes a fourth sending unit. The fourth sending unit is configured to send fourth information to a second device. The fourth information is used to indicate one or more of the following: deletion of the first local identity; or deletion of the first public identity.

In some implementations, the device further includes a fifth sending unit. The fifth sending unit is configured to send fifth information to a second device. The fifth information is used to indicate one or more of the following: new addition of the first local identity; or new addition of the first public identity.

In some implementations, an association relationship between the first local identity and the first public identity is configured by the first device or the second device.

In some implementations, the first local identity includes one or more of the following: a local identity corresponding to an operator; a local identity corresponding to a base station; a local identity corresponding to a terminal device; or a local identity corresponding to a region.

In some implementations, the first device and the second device satisfy one of the following: the first device is a terminal device and the second device is a base station; the first device is the base station and the second device is the terminal device; the first device is the terminal device and the second device is a core network device; the first device is the core network device and the second device is the terminal device; the first device is the base station and the second device is the core network device; the first device is the core network device and the second device is the base station; both the first device and the second device are terminal devices; both the first device and the second device are base stations; or both the first device and the second device are core network devices.

FIG. 14 is a schematic diagram of a communication device according to an embodiment of the present disclosure, the communication device 1400 illustrated in FIG. 14 is a second device, and the communication device 1400 may include a receiving unit 1410.

The receiving unit 1410 is configured to receive first information sent by a first device. The first information includes one or more of the following: a first public identity, associated with a first model for wireless communication; or a first local identity, associated with the first model and/or the first public identity.

In some implementations, the first public identity includes one or more of the following: a first identity, used for identifying an applicable scope of the first model; or a second identity, used for identifying a model scheme for the first model.

In some implementations, the first identity includes one or more of the following: a third identity, used for identifying one or more regions; or a fourth identity, used for identifying one or more organizations.

In some implementations, the third identity includes region identities for a plurality of regions ranging from large to small region scopes.

In some implementations, the fourth identity is used for identifying one or more of the following organizations: an organization that provides the first model; or an organization that optimizes the first model.

In some implementations, the second identity includes one or more of the following: a fifth identity, used for identifying a serial number of the first model; a sixth identity, used for identifying a task for the first model; or a seventh identity, used for identifying a characteristic attribute of the first model.

In some implementations, the seventh identity includes one or more of the following identities: an eighth identity, associated with a model structure of the first model; a ninth identity, associated with a model platform for the first model; a tenth identity, associated with an interface for the first model; an eleventh identity, associated with performance of the first model; a twelfth identity, associated with training data for the first model; a thirteenth identity, associated with a quantization manner for the first model; a fourteenth identity, associated with model complexity of the first model; or a fifteenth identity, associated with a size of the first model.

In some implementations, the first public identity is used to identify the first model uniquely within a first scope.

In some implementations, the first scope includes one of the following: global scope, national scope, region scope, or organization scope.

In some implementations, a number of bits occupied by the first local identity is less than a number of bits occupied by the first public identity.

In some implementations, the receiving unit is configured to receive second information sent by the first device. The second information is used to indicate an association relationship between the first public identity and the first local identity.

In some implementations, the receiving unit is configured to receive third information sent by the first device. The third information is used to indicate one or more of the following: a change in an association relationship between the first local identity and the first model; a change in an association relationship between the first local identity and the first public identity; or a change in an association relationship between the first public identity and the first model.

In some implementations, the receiving unit is configured to receive fourth information sent by the first device. The fourth information is used to indicate one or more of the following: deletion of the first local identity; or deletion of the first public identity.

In some implementations, the receiving unit is configured to receive fifth information sent by the first device. The fifth information is used to indicate one or more of the following: new addition of the first local identity; or new addition of the first public identity.

In some implementations, an association relationship between the first local identity and the first public identity is configured by the first device or the second device.

In some implementations, the first local identity includes one or more of the following: a local identity corresponding to an operator; a local identity corresponding to a base station; a local identity corresponding to a terminal device; or a local identity corresponding to a region.

In some implementations, the first device and the second device satisfy one of the following: the first device is a terminal device and the second device is a base station; the first device is the base station and the second device is the terminal device; the first device is the terminal device and the second device is a core network device; the first device is the core network device and the second device is the terminal device; the first device is the base station and the second device is the core network device; the first device is the core network device and the second device is the base station; both the first device and the second device are terminal devices; both the first device and the second device are base stations; or both the first device and the second device are core network devices.

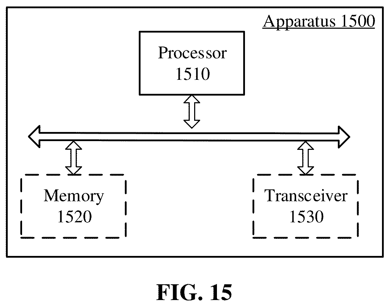

FIG. 15 is a schematic structural diagram of an apparatus according to an embodiment of the present disclosure. The dotted line in FIG. 15 indicates that the unit or module is optional. The apparatus 1500 may be used to implement the methods described in the above method embodiments. The apparatus 1500 may be a chip, or a terminal device.

The apparatus 1500 may include one or more processors 1510. The processor 1510 may support the apparatus 1500 to implement the methods described previously in the method embodiments. The processor 1510 may be a general purpose processor or a special-purpose processor. For example, the processor may be a central processing unit (CPU). Optionally, the processor may be a general purpose processor, a digital signal processor (DSP), an application specific integrated circuit (ASIC), a field programmable gate array (FPGA) or other programmable logic devices, discrete gates or transistor logic devices, or discrete hardware components. The general purpose processor may be a microprocessor or any conventional processor.

The apparatus 1500 may further include one or more memories 1520. The memory 1520 stores a program that may be executed by the processor 1510 such that the processor 1510 performs the methods described previously in the method embodiments. The memory 1520 may be independent of the processor 1510 or may be integrated within the processor 1510.

The apparatus 1500 may also include a transceiver 1530. The processor 1510 may communicate with other device or chips through the transceiver 1530. For example, the processor 1510 may transmit and receive data with other device or chips via the transceiver 1530.

In the embodiments of the present disclosure, there is further provided a computer-readable storage medium, configured to store a program. The computer-readable storage medium may be applied to the terminal device provided by the embodiments of the present disclosure, and the program causes a computer to perform the method implemented by the terminal device in various embodiments of the present disclosure.

In the embodiments of the present disclosure, there is further provided a computer program product. The computer program product includes a program. The computer program product may be applied to the terminal device provided by the embodiments of the present disclosure, and the program causes a computer to perform the method implemented by the terminal device in various embodiments of the present disclosure.

In the embodiments of the present disclosure, there is further provided a computer program. The computer program may be applied to the terminal device provided by the embodiments of the present disclosure, and the computer program causes a computer to perform the method implemented by the terminal device in various embodiments of the present disclosure.

It is to be understood that the terms "system" and "network" in the present disclosure may be used interchangeably. In addition, Terms used in the present disclosure are used only for explanation of specific embodiments of the present disclosure and are not intended to be limiting. Terms "first", "second", "third", "fourth", etc. in the description and claims of the present disclosure and the above drawings are used to distinguish different objects from each other, and are not used to describe a particular order. Furthermore, the terms "including" and "having" and any variations thereof are intended to cover non-exclusive inclusion.

The reference to "indicate" in the embodiments of the present disclosure may be a direct indication, may be an indirect indication, or may indicate an association relationship. For example, A indicates B, which may mean that A directly indicates B, for example, B may be obtained through A. It may also mean that A indirectly indicates B, for example, A indicates C, and B may be obtained by C. It may also indicate that there is an association relationship between A and B.

In the embodiments of the present disclosure, "B corresponding to A" means that B is associated with A, and B may be determined based on A. It is also to be understood, however, that determining B based on A does not mean determining B based on A alone, but may also be determined based on A and/or other information.

In the embodiments of the present disclosure, the term "correspond" may mean that there is a direct correspondence or an indirect correspondence relationship between the two, may also mean that there is an association relationship between the two, may also be a relationship between indication and being indicated, configuration and being configured, etc.

In embodiments of the present disclosure, the "predefined" or "pre-configured" may be implemented by pre-storing corresponding codes, tables, or other manners that may be used to indicate relevant information in devices (e.g., including terminal devices and network devices), the specific implementation of which is not limited by the present disclosure. For example, predefined may refer to what is defined in the protocol.

In embodiments of the present disclosure, the "protocol" may refer to standard protocols in the communication field, such as an LTE protocol, an NR protocol, and related protocols applied in future communication systems, which are not limited herein.

In the embodiments of the present disclosure, the term "and/or" is used to describe an association relationship of associated objects, and represents that there may be three relationships. For example, A and/or B may represent the following three situations: i.e., independent existence of A, existence of both A and B and independent existence of B. In addition, the character "/" in the present disclosure generally represents that an "or" relationship is formed between the previous and next associated objects.

In various embodiments of the present disclosure, the size of the sequence numbers of the above processes does not mean the order of execution, and the execution order of each process should be determined by its function and inherent logic, and should not be limited in any way to the implementation process of the embodiments of the present disclosure.

In several embodiments provided herein, it is to be understood that the disclosed systems, apparatuses and methods may be implemented in other manners. For example, the above-described embodiments of the apparatus is only schematic, for example, the division of the units is only a logical function division, and in practice, there may be another division manner, for example, multiple units or components may be combined or integrated into another system, or some features may be ignored or not performed. On the other hand, the coupling or direct coupling or communication connection between each other illustrated or discussed may be indirect coupling or communication connection through some interfaces, devices or units, and may be electrical, mechanical or other form.

The units illustrated as separate elements may or may not be physically separated, and the elements displayed as units may or may not be physical units, i.e. may be located in a place, or may be distributed over a plurality of network units. Part or all of the units may be selected according to the actual needs to achieve the purpose of the embodiments of the present disclosure.

In addition, various functional units in various embodiments of the present disclosure may be integrated in one processing unit, each unit may exist physically alone, or two or more units may be integrated in one unit.

In the aforementioned embodiments, the described functions may be implemented in whole or in part by software, hardware, firmware or any combination thereof. When implemented in software, the solution can be implemented in whole or in part in the form of a computer program product. The computer program product includes one or more computer instructions. When the computer program instructions are loaded and executed on a computer, the flows or functions described in accordance with embodiments of the present disclosure are generated in whole or in part. The computer may be a general purpose computer, a special purpose computer, a computer network, or other programmable device. The computer instructions may be stored in a computer-readable storage medium, or from one computer-readable storage medium to another. For example, the computer instructions may be transmitted from a web site, computer, server, or data center to another web site, computer, server, or data center via wired (e.g. coaxial cable, optical fiber, digital subscriber line (DSL)) or wireless (e.g. infrared, wireless, microwave, etc.). The computer-readable storage medium may be any usable medium that a computer may read or a data storage device containing one or more usable media integration, such as a server, data center, etc. The usable media may be magnetic media (e.g. floppy disk, hard disk, magnetic tape), optical media (e.g. digital video disc (DVD)), or semiconductor media (e.g. solid state disk (SSD)), etc.

The above is only the specific implementation of the present disclosure, but the scope of protection of the present disclosure is not limited thereto. Any person skilled in the art may easily think of changes or substitutions within the technical scope disclosed in the present disclosure, which should be covered within the protection scope of the present disclosure. Therefore, the scope of protection of the present disclosure shall be subject to the scope of protection of the claims.

## Claims

1. A method for wireless communication, comprising:
determining, by a first device, first information, wherein the first information comprises one or more of the following:
a first public identity, associated with a first model for wireless communication; or
a first local identity, associated with the first model and/or the first public identity.

2. The method of claim 1, wherein the first public identity comprises one or more of the following:
a first identity, used for identifying an applicable scope of the first model; or
a second identity, used for identifying a model scheme for the first model.

3. The method of claim 2, wherein the first identity comprises one or more of the following:
a third identity, used for identifying one or more regions; or
a fourth identity, used for identifying one or more organizations.

4. The method of claim 3, wherein the third identity comprises region identities for a plurality of regions ranging from large to small region scopes.

5. The method of claim 3 or 4, wherein the fourth identity is used for identifying one or more of the following organizations:
an organization that provides the first model; or
an organization that optimizes the first model.

6. The method of any one of claims 2-5, wherein the second identity comprises one or more of the following:
a fifth identity, used for identifying a serial number of the first model;
a sixth identity, used for identifying a task for the first model; or
a seventh identity, used for identifying a characteristic attribute of the first model.

7. The method of claim 6, wherein the seventh identity comprises one or more of the following identities:
an eighth identity, associated with a model structure of the first model;
a ninth identity, associated with a model platform for the first model;
a tenth identity, associated with an interface for the first model;
an eleventh identity, associated with performance of the first model;
a twelfth identity, associated with training data for the first model;
a thirteenth identity, associated with a quantization manner for the first model;
a fourteenth identity, associated with model complexity of the first model; or
a fifteenth identity, associated with a size of the first model.

8. The method of any one of claims 1-7, wherein the first public identity is used to uniquely identify the first model within a first scope.

9. The method of claim 8, wherein the first scope comprises one of the following: a global scope, a national scope, a region scope, or an organization scope.

10. The method of any one of claims 1-9, wherein a number of bits occupied by the first local identity is less than a number of bits occupied by the first public identity.

11. The method of any one of claims 1-10, further comprising:
sending, by the first device, the first information to a second device.

12. The method of any one of claims 1-11, further comprising:
sending, by the first device, second information to a second device, wherein the second information is used to indicate an association relationship between the first public identity and the first local identity.

13. The method of any one of claims 1-12, further comprising:
sending, by the first device, third information to a second device, wherein the third information is used to indicate one or more of the following:
a change in an association relationship between the first local identity and the first model;
a change in an association relationship between the first local identity and the first public identity; or
a change in an association relationship between the first public identity and the first model.

14. The method of any one of claims 1-12, further comprising:
sending, by the first device, fourth information to a second device, wherein the fourth information is used to indicate one or more of the following:
deletion of the first local identity; or
deletion of the first public identity.

15. The method of any one of claims 1-12, further comprising:
sending, by the first device, fifth information to a second device, wherein the fifth information is used to indicate one or more of the following:
new addition of the first local identity; or
new addition of the first public identity.

16. The method of any one of claims 1-15, wherein an association relationship between the first local identity and the first public identity is configured by the first device or the second device.

17. The method of any one of claims 1-16, wherein the first local identity comprises one or more of the following:
a local identity corresponding to an operator;
a local identity corresponding to a base station;
a local identity corresponding to a terminal device; or
a local identity corresponding to a region.

18. The method of any one of claims 1-17, wherein the first device and the second device satisfy one of the following:
the first device is a terminal device and the second device is a base station;
the first device is the base station and the second device is the terminal device;
the first device is the terminal device and the second device is a core network device;
the first device is the core network device and the second device is the terminal device;
the first device is the base station and the second device is the core network device;
the first device is the core network device and the second device is the base station;
both the first device and the second device are terminal devices;
both the first device and the second device are base stations; or
both the first device and the second device are core network devices.

19. A method for wireless communication, comprising:
receiving, by a second device, first information sent by a first device, wherein the first information comprises one or more of the following:
a first public identity, associated with a first model for wireless communication; or
a first local identity, associated with the first model and/or the first public identity.

20. The method of claim 19, wherein the first public identity comprises one or more of the following:
a first identity, used for identifying an applicable scope of the first model; or
a second identity, used for identifying a model scheme for the first model.

21. The method of claim 20, wherein the first identity comprises one or more of the following:
a third identity, used for identifying one or more regions; or
a fourth identity, used for identifying one or more organizations.

22. The method of claim 21, wherein the third identity comprises region identities for a plurality of regions ranging from large to small region scopes.

23. The method of claim 21 or 22, wherein the fourth identity is used for identifying one or more of the following organizations:
an organization that provides the first model; or
an organization that optimizes the first model.

24. The method of any one of claims 20-23, wherein the second identity comprises one or more of the following:
a fifth identity, used for identifying a serial number of the first model;
a sixth identity, used for identifying a task for the first model; or
a seventh identity, used for identifying a characteristic attribute of the first model.

25. The method of claim 24, wherein the seventh identity comprises one or more of the following identities:
an eighth identity, associated with a model structure of the first model;
a ninth identity, associated with a model platform for the first model;
a tenth identity, associated with an interface for the first model;
an eleventh identity, associated with performance of the first model;
a twelfth identity, associated with training data for the first model;
a thirteenth identity, associated with a quantization manner for the first model;
a fourteenth identity, associated with model complexity of the first model; or
a fifteenth identity, associated with a size of the first model.

26. The method of any one of claims 19-25, wherein the first public identity is used to uniquely identify the first model within a first scope.

27. The method of claim 26, wherein the first scope comprises one of the following: a global scope, a national scope, a region scope, and an organization scope.

28. The method of any one of claims 19-27, wherein a number of bits occupied by the first local identity is less than a number of bits occupied by the first public identity.

29. The method of any one of claims 19-28, further comprising:
receiving, by the second device, second information sent by the first device, wherein the second information is used to indicate an association relationship between the first public identity and the first local identity.

30. The method of any one of claims 19-29, further comprising:
receiving, by the second device, third information sent by the first device, the third information being used for indicating one or more of the following:
a change in an association relationship between the first local identity and the first model;
a change in an association relationship between the first local identity and the first public identity; or
a change in an association relationship between the first public identity and the first model.

31. The method of any one of claims 19-29, further comprising:
receiving, by the second device, fourth information sent by the first device, wherein the fourth information is used to indicate one or more of the following:
deletion of the first local identity; or
deletion of the first public identity.

32. The method of any one of claims 19-29, further comprising:
receiving, by the second device, fifth information sent by the first device, wherein the fifth information is used to indicate one or more of the following:
new addition of the first local identity; or
new addition of the first public identity.

33. The method of any one of claims 19-32, wherein an association relationship between the first local identity and the first public identity is configured by the first device or the second device.

34. The method of any one of claims 19-33, wherein the first local identity comprises one or more of the following:
a local identity corresponding to an operator;
a local identity corresponding to a base station;
a local identity corresponding to a terminal device; or
a local identity corresponding to a region.

35. The method of any one of claims 19-34, wherein the first device and the second device satisfy one of the following:
wherein the first device and the second device satisfy one of the following:
the first device is a terminal device and the second device is a base station;
the first device is the base station and the second device is the terminal device;
the first device is the terminal device and the second device is a core network device;
the first device is the core network device and the second device is the terminal device;
the first device is the base station and the second device is the core network device;
the first device is the core network device and the second device is the base station;
both the first device and the second device are terminal devices;
both the first device and the second device are base stations; or
both the first device and the second device are core network devices.

36. A communication device, wherein the communication device is a first device and comprises:
a determining unit, configured to determine first information, wherein the first information comprises one or more of the following:
a first public identity, associated with a first model for wireless communication; or
a first local identity, associated with the first model and/or the first public identity.

37. The device of claim 36, wherein the first public identity comprises one or more of the following:
a first identity, used for identifying an applicable scope of the first model; or
a second identity, used for identifying a model scheme for the first model.

38. The device of claim 37, wherein the first identity comprises one or more of the following:
a third identity, used for identifying one or more regions; or
a fourth identity, used for identifying one or more organizations.

39. The device of claim 38, wherein the third identity comprises region identities for a plurality of regions ranging from large to small region scopes.

40. The device of claim 38 or 39, wherein the fourth identity is used for identifying one or more of the following organizations:
an organization that provides the first model; or
an organization that optimizes the first model.

41. The device of any one of claims 37-40, wherein the second identity comprises one or more of the following:
a fifth identity, used for identifying a serial number of the first model;
a sixth identity, used for identifying a task for the first model; or
a seventh identity, used for identifying a characteristic attribute of the first model.

42. The device of claim 41, wherein the seventh identity comprises one or more of the following identities:
an eighth identity, associated with a model structure of the first model;
a ninth identity, associated with a model platform for the first model;
a tenth identity, associated with an interface for the first model;
an eleventh identity, associated with performance of the first model;
a twelfth identity, associated with training data for the first model;
a thirteenth identity, associated with a quantization manner for the first model;
a fourteenth identity, associated with model complexity of the first model; or
a fifteenth identity, associated with a size of the first model.

43. The device of any one of claims 36-42, wherein the first public identity is used to uniquely identify the first model within a first scope.

44. The device of claim 8, wherein the first scope comprises one of the following: a global scope, a national scope, a region scope, or an organization scope.

45. The device of any one of claims 36-44, wherein a number of bits occupied by the first local identity is less than a number of bits occupied by the first public identity.

46. The device of any one of claims 36-45, wherein the device further comprises:
a first sending unit, configured to send the first information to a second device.

47. The device of any one of claims 36-46, wherein the device further comprises:
a second sending unit, configured to send second information to a second device, wherein the second information is used to indicate an association relationship between the first public identity and the first local identity.

48. The device of any one of claims 36-47, wherein the device further comprises:
a third sending unit, configured to send third information to a second device, wherein the third information is used to indicate one or more of the following:
a change in an association relationship between the first local identity and the first model;
a change in an association relationship between the first local identity and the first public identity; or
a change in an association relationship between the first public identity and the first model.

49. The device of any one of claims 36-47, wherein the device further comprises:
a fourth sending unit, configured to send fourth information to a second device, wherein the fourth information is used to indicate one or more of the following:
deletion of the first local identity; or
deletion of the first public identity.

50. The device of any one of claims 36-47, wherein the device further comprises:
a fifth sending unit, configured to send fifth information to a second device, wherein the fifth information is used to indicate one or more of the following:
new addition of the first local identity; or
new addition of the first public identity.

51. The device of any one of claims 36-50, wherein an association relationship between the first local identity and the first public identity is configured by the first device or the second device.

52. The device of any one of claims 36-51, wherein the first local identity comprises one or more of the following:
a local identity corresponding to an operator;
a local identity corresponding to a base station;
a local identity corresponding to a terminal device; or
a local identity corresponding to a region.

53. The device of any one of claims 36-52, wherein the first device and the second device satisfy one of the following:
the first device is a terminal device and the second device is a base station;
the first device is the base station and the second device is the terminal device;
the first device is the terminal device and the second device is a core network device;
the first device is the core network device and the second device is the terminal device;
the first device is the base station and the second device is the core network device;
the first device is the core network device and the second device is the base station;
both the first device and the second device are terminal devices;
both the first device and the second device are base stations; or
both the first device and the second device are core network devices.

54. A communication device, wherein the communication device is a second device and comprises:
a receiving unit, configured to receive first information sent by a first device, wherein the first information comprises one or more of the following:
a first public identity, associated with a first model for wireless communication; or
a first local identity, associated with the first model and/or the first public identity.

55. The device of claim 54, wherein the first public identity comprises one or more of the following:
a first identity, used for identifying an applicable scope of the first model; or
a second identity, used for identifying a model scheme for the first model.

56. The device of claim 55, wherein the first identity comprises one or more of the following:
a third identity, used for identifying one or more regions; or
a fourth identity, used for identifying one or more organizations.

57. The device of claim 56, wherein the third identity comprises region identities for a plurality of regions ranging from large to small region scopes.

58. The device of claim 56 or 57, wherein the fourth identity is used for identifying one or more of the following organizations:
an organization that provides the first model; or
an organization that optimizes the first model.

59. The device of any one of claims 55-58, wherein the second identity comprises one or more of the following:
a fifth identity, used for identifying a serial number of the first model;
a sixth identity, used for identifying a task for the first model; or
a seventh identity, used for identifying a characteristic attribute of the first model.

60. The device of claim 59, wherein the seventh identity comprises one or more of the following identities:
an eighth identity, associated with a model structure of the first model;
a ninth identity, associated with a model platform for the first model;
a tenth identity, associated with an interface for the first model;
an eleventh identity, associated with performance of the first model;
a twelfth identity, associated with training data for the first model;
a thirteenth identity, associated with a quantization manner for the first model;
a fourteenth identity, associated with model complexity of the first model; or
a fifteenth identity, associated with a size of the first model.

61. The device of any one of claims 54-60, wherein the first public identity is used to uniquely identify the first model within a first scope.

62. The device of claim 61, wherein the first scope comprises one of the following: a global scope, a national scope, a region scope, or an organization scope.

63. The device of any one of claims 54-62, wherein a number of bits occupied by the first local identity is less than a number of bits occupied by the first public identity.

64. The device of any one of claims 54-63, wherein the receiving unit is configured to receive second information sent by the first device, wherein the second information is used to indicate an association relationship between the first public identity and the first local identity.

65. The device of any one of claims 54-64, wherein the receiving unit is configured to receive third information sent by the first device, wherein the third information is used for indicating one or more of the following:
a change in an association relationship between the first local identity and the first model;
a change in an association relationship between the first local identity and the first public identity; or
a change in an association relationship between the first public identity and the first model.

66. The device of any one of claims 54-64, wherein the receiving unit is configured to receive fourth information sent by the first device, wherein the fourth information is used to indicate one or more of the following:
deletion of the first local identity; or
deletion of the first public identity.

67. The device of any one of claims 54-64, wherein the receiving unit is configured to receive fifth information sent by the first device, wherein the fifth information is used to indicate one or more of the following:
new addition of the first local identity; or
new addition of the first public identity.

68. The device of any one of claims 54-67, wherein an association relationship between the first local identity and the first public identity is configured by the first device or the second device.

69. The device of any one of claims 54-68, wherein the first local identity comprises one or more of the following:
a local identity corresponding to an operator;
a local identity corresponding to a base station;
a local identity corresponding to a terminal device; or
a local identity corresponding to a region.

70. The device of any one of claims 54-69, wherein the first device and the second device satisfy one of the following:
wherein the first device and the second device satisfy one of the following:
the first device is a terminal device and the second device is a base station;
the first device is the base station and the second device is the terminal device;
the first device is the terminal device and the second device is a core network device;
the first device is the core network device and the second device is the terminal device;
the first device is the base station and the second device is the core network device;
the first device is the core network device and the second device is the base station;
both the first device and the second device are terminal devices;
both the first device and the second device are base stations; or
both the first device and the second device are core network devices.

71. A communication device, comprising a transceiver, a memory, and a processor, wherein the memory is configured to store a program, the processor is configured to call the program in the memory, and control the transceiver to receive or transmit signals to cause a terminal to implement the method of any one of claims 1-35.

72. An apparatus, comprising a processor, configured to call a program from a memory, to cause the apparatus to implement the method of any one of claims 1-35.

73. A chip, comprising a processor, configured to call a program from a memory, to cause a device equipped with the chip to implement the method of any one of claims 1-35.

74. A computer-readable storage medium, having stored thereon a program, wherein the program causes a computer to execute the method of any one of claims 1-35.

75. A computer program product, comprising a program, wherein the program causes a computer to execute the method of any one of claims 1-35.

76. A computer program, which causes a computer to execute the method of any one of claims 1-35.
